Europäisches Patentamt

European Patent Office

Office européen des brevets

(19)

(11) **EP 1 127 278 B1**

(12) **EUROPÄISCHE PATENTSCHRIFT**

(45) Veröffentlichungstag und Bekanntmachung des Hinweises auf die Patenterteilung:
**11.01.2006 Patentblatt 2006/02**

(21) Anmeldenummer: **99971921.4**

(22) Anmeldetag: **03.11.1999**

(51) Int Cl.:
*G01P 15/08* (2006.01)       *G05B 19/416* (2006.01)

(86) Internationale Anmeldenummer:
**PCT/EP1999/008376**

(87) Internationale Veröffentlichungsnummer:
**WO 2000/028334 (18.05.2000 Gazette 2000/20)**

(54) **EINRICHTUNG UND VERFAHREN ZUR GEWINNUNG EINES DYNAMISCH HOCHWERTIGEN, TEILWEISE SYNTHETISIERTEN SIGNALS FÜR DIE BESCHLEUNIGUNG EINES LÄUFERS EINES ELEKTRISCHEN ANTRIEBS**

DEVICE AND METHOD FOR GENERATING A PARTIALLY SYNTHESIZED SIGNAL WITH VERY GOOD DYNAMIC QUALITY FOR THE ACCELERATION OF A ROTOR IN AN ELECTRICAL DRIVE MECHANISM

DISPOSITIF ET PROCEDE POUR LA PRODUCTION D'UN SIGNAL PARTIELLEMENT SYNTHETISE DE HAUTE QUALITE DYNAMIQUE CORRESPONDANT A L'ACCELERATION D'UN ROTOR DANS UN DISPOSITIF D'ENTRAINEMENT ELECTRIQUE

(84) Benannte Vertragsstaaten:
**AT BE CH CY DE DK ES FI FR GB GR IE IT LI LU MC NL PT SE**

(30) Priorität: **05.11.1998 DE 19851003**

(43) Veröffentlichungstag der Anmeldung:
**29.08.2001 Patentblatt 2001/35**

(73) Patentinhaber: **Dr. Johannes Heidenhain GmbH 83301 Traunreut (DE)**

(72) Erfinder:
 • **BOEHRINGER, Andreas**
   **D-70197 Stuttgart (DE)**

 • **SCHMIDT, Ralph**
   **D-70197 Stuttgart (DE)**

(56) Entgegenhaltungen:
**EP-A- 0 139 010          EP-A- 0 661 543
US-A- 3 662 251**

 • **BUDIG P K ET AL: "ZUR ANWENDUNG EINES BESCHLEUNIGUNGSSENSORS IN ANTRIEBSSYSTEMEN" ELEKTRIE,DD,VEB VERLAG TECHNIK. BERLIN, Bd. 44, Nr. 6, 1. Januar 1990 (1990-01-01), Seiten 205-206, XP000149331 ISSN: 0013-5399**

EP 1 127 278 B1

**Beschreibung**

Für den Aufbau einer hochwertigen Positions- oder Geschwindigkeitsregelung für einen rotatorischen bzw. linearen elektrischen Antrieb ist es bisher üblich, die unmittelbar drehmoment- bzw. kraftbildende Komponente von dessen Stromraumzeiger in einer innersten Schleife zu führen, d. h. unterlagert zu regeln [1;2]. Jüngste Entwicklungen [3;4] haben gezeigt, daß es demgegenüber sehr vorteilhaft ist, in der innersten Schleife nicht die unmittelbar drehmoment- bzw. kraftbildende Komponente des Stromraumzeigers, sondern unmittelbar die Beschleunigung des bewegten Teils zu führen, d. h. unterlagert zu regeln. Dies ist bei rotatorischen Antrieben die Drehbeschleunigung des Rotors und bei Linearantrieben die Linearbeschleunigung des Läufers. Somit ist eine Erfassung dieser Größen mit Hilfe eines Beschleunigungsmessers erforderlich, der z. B. nach dem Ferraris-Prinzip arbeiten kann [3;4;5]. Dieser Beschleunigungsmesser weist zum einen aber grundsätzlich eine, wenn auch geringe Meßverzögerung auf. Zum anderen kann dieser Beschleunigungsmesser nie völlig starr mit dem Ort, an dem bei einem rotatorischen Antrieb der Drehschub bzw. bei einem Linearantrieb der Linearschub angreift, verbunden werden. Diese beiden Gegebenheiten führen dazu, daß sich im unterlagerten Regelkreis für die Beschleunigung Grenzzyklen und/oder selbsterregte Schwingungen ausbilden [4]. Ohne eine Vermeidung dieser Grenzzyklen und/oder selbsterregten Schwingungen ist der Einsatz einer solchen unterlagerten Regelschleife bei einer hochwertigen Positions- oder Geschwindigkeitsregelung nicht zielführend. Ein Verfahren zur Unterdrückung dieser Grenzzyklen und/oder selbsterregten Schwingungen in der unterlagerten Regelschleife für die Beschleunigung wird für rotatorische Antriebe in [4] vorgestellt. Dieses Verfahren weist aber den Nachteil auf, daß seine Realisierung extrem aufwendig ist und daß es dazuhin äußerst empfindlich auf Schwankungen der Parameter des Antriebs reagiert.

Die EP 0 661 543 A1 zeigt ein Gebersystem zur Ermittlung wenigstens einer der drei Größen Drehbeschleunigung, Winkelgeschwindigkeit oder Winkellage eines rotierenden Bauteils. Eine verbesserte Führung der Maschine wird dabei dadurch erreicht, dass zwei mit dem rotierenden Bauteil zu verbindende Signalgeber drehstarr miteinander verbunden sind sowie als mechanische Einheit ausgebildet sind. Durch eine Zusatzschaltung der Auswerteschaltung, mit der das vom Signalerfassungssystem für die Drehbeschleunigung gelieferte Signal mit einem Quotienten aus der Meßzeitkonstanten dieses Signalerfassungssystems und der Integrationszeitkonstanten einer ersten Integrationsstufe gewichtet wird, wird die generelle zeitliche Verzögerung zwischen dem von dem Signalerfassungssystem für die Drehbeschleunigung ausgegebenen Signal und der tatsächlichen Drehbeschleunigung verringert.

In P.-K. Budig u. a.: Zur Anwendung eines Beschleunigungssensors in Antriebsystemen, in: Elektrie 44 (1990) Nr. 6, S. 205-206 wird die mögliche Ableitung der Größen Vorschub, Geschwindigkeit bzw. Drehzahl einer Werkzeugmaschine aus dem Meßsignal eines Beschleunigungssensors unter Verwendung eines Integrators beschrieben.

Die EP 0 139 010 Al zeigt ein Verfahren zur Steuerung der Beschleunigung oder des Abbremsens eines Servomotors, wie er beispielsweise in einer Werkzeugmaschine oder in einem Industrieroboter einsetzbar ist. Die Steuersignale des Servomotors sollen sich dabei nicht sprunghaft ändern, sondern vorzugsweise linear ansteigen bzw. abfallen und darüber hinaus mit einer Tiefpaßfunktion verknüpft werden, insbesondere mit einem Besselfilter, um ruckartige Bewegungen des Antriebsystems und damit verbundenen Verschleiß zu verhindern.

Die US 3,662,251 zeigt ein Verfahren und ein System zum Messen von Beschleunigung und Geschwindigkeit der Welle einer Synchronmaschine. Durch Verknüpfung der Beschleunigungsleistung mit der Geschwindigkeit wird das Drehmoment ermittelt. Durch weitere Berechnung läßt sich die Beschleunigung, durch Integration hieraus die Geschwindigkeit ermitteln.

Der Erfindung liegt das Problem zugrunde, ein Verfahren und eine Vorrichtung bereitzustellen, die auf einfache Weise ein dynamisch hochwertiges, teilweise synthetisiertes Signals für die Drehbeschleunigung des Läufers eines elektrischen Antriebs hervorbringen. Mit diesem Signal kann weitgehend unabhängig von den Parametern des Antriebs eine unterlagerte Regelung der Beschleunigung unter Vermeidung von Grenzzyklen und/oder selbsterregten Schwingungen in diesem unterlagerten Beschleunigungsregelkreis verwirklicht werden.

Das Problem ist durch das im Anspruch 1 bestimmte Verfahren und durch die im Anspruch 13 bestimmte Vorrichtung gelöst. Besondere Ausführungsarten der Erfindung sind in den Unteransprüchen bestimmt.

Zur Gewinnung eines hochdynamischen Signals für die Beschleunigung eines Elektroantriebs werden einerseits das Beschleunigungssignal $\underline{b}_m = \underline{\alpha} \cdot F_g(p)$, worin $F_g(p)$ die Meßübertragungsfunktion beschreibt, und andererseits das Drehmoment $\underline{m}$ oder die Vortriebskraft $\underline{f}$ als Beschleunigungsersatzsignal $\underline{b}_{Em} = \underline{m}$ oder $\underline{b}_{Em} = \underline{f}$ erfaßt und unter Vernachlässigung sämtlicher, im gesamten Antrieb entstehender Verluste sowie unter Zugrundelegung einer absolut steifen Verbindung zwischen jener Fläche, an welcher der Schub des Antriebs angreift, bis zu jenem Ort, wo der für die Beschleunigungserfassung genutzte Effekt generiert wird, jeweils so normiert, daß die Beziehung $\underline{b}_m = \underline{\alpha} \cdot F_g(p) = \underline{b}_{Em} \cdot F_g(p)$ erfüllt ist. Das Beschleunigungssignal wird einem Tiefpaß mit der Tiefpaßübertragungsfunktion $F_T(p)$ zugeführt, an dessen Ausgang daher das Signal $\underline{x} = \underline{b}_m F_T(p)$ anliegt und das Beschleunigungsersatzsignal wird einem Hochpaß mit der Hochpaßübertragungsfunktion $F_H(p) = F_T(0) - F_T(p) \cdot F_g(p)$ zugeführt, an dessen Ausgang daher das Signal $\underline{y} = \underline{b}_{Em} \cdot [F_T(0) - F_T(p) \cdot F_g(p)]$ anliegt. Schließlich wird das Synthesesignal $\underline{z} = \underline{x} + \underline{y}$ gebildet, das als hochdynamisches Ersatzsignal für den unverzögerten Beschleunigungsistwert des Läufers bei der regelungstechnischen Führung des Antriebs Verwendung findet.

Hierzu wird bei einem Drehstromantrieb die Drehbeschleunigung $\underline{\alpha}$ des rotatorisch bewegten Läufers mittels eines, mit diesem Läufer mechanisch verbundenen, vorzugsweise nach dem Ferraris-Prinzip arbeitenden Beschleunigungsmessers [3;4;5] meßtechnisch erfaßt und steht damit als gemessenes Beschleunigungssignal $\underline{b}_m = \underline{\alpha} \cdot F_g(p)$ zur Verfügung. Hierbei stellt $F_g(p)$, mit $F_g(0) = 1$, die sogenannte Meßübertragungsfunktion des Beschleunigungsmessers dar. Das Drehmoment $\underline{m}$ des Antriebs, das nachstehend als Beschleunigungsersatzsignal $\underline{b}_E = m$ bezeichnet sei, wird ebenfalls meßtechnisch erfaßt und steht damit als gemessenes Beschleunigungsersatzsignal $\underline{b}_{Em}$ zur Verfügung. Wie unmittelbar einzusehen ist, kann, ohne die Funktion der erfindungsgemäßen Einrichtung zu beeinträchtigen, anstelle des Drehmoments $\underline{m}$ des Antriebs natürlich auch die unmittelbar drehmomentbildende Querstromkomponente $i_q$ des Stromraumzeigers der drehstromgespeisten Wicklung des Antriebs als Beschleunigungsersatzsignal $\underline{b}_E = i_q$ verwendet werden. Dabei wird nachstehend, wie in der Regelungstechnik üblich, davon ausgegangen, daß einerseits das gemessene Beschleunigungssignal $\underline{b}_m$ und andererseits das gemessene Beschleunigungsersatzsignal $\underline{b}_{Em}$ unter Vernachlässigung sämtlicher, im genannten Antrieb entstehender Verluste und unter Zugrundelegung einer mechanisch absolut drehsteifen Verbindung von jener Oberfläche des rotatorisch bewegten Läufers, an welcher der Drehschub des Antriebs angreift, bis zu jenem Ort des rotatorisch bewegten Teils des Drehbeschleunigungsmessers, wo der für die Beschleunigungserfassung genutzte Effekt generiert wird, jeweils so normiert sind, daß die Beziehung $\underline{b}_m = \underline{\alpha} \cdot F_g(p) = \underline{b}_{Em} \cdot F_g(p)$ erfüllt ist. Das gemessene Beschleunigungssignal $\underline{b}_m$ wird dem Eingang eines Tiefpasses mit der Tiefpaßübertragungsfunktion $F_T(p)$, mit $F_T(0)$ vorzugsweise gleich 1, zugeführt. An dessen Ausgang kann daher das Signal $\underline{x} = \underline{b}_m \cdot F_T(p)$ abgenommen werden. Das gemessene Beschleunigungsersatzsignal $\underline{b}_{Em}$ wird dem Eingang eines Hochpasses mit der Hochpaßübertragungsfunktion $F_H(p) = F_T(0) - F_T(p) \cdot F_g(p)$ zugeführt. An dessen Ausgang kann infolgedessen das Signal $\underline{y} = \underline{b}_{Em} \cdot [F_T(0) - F_T(p) \cdot F_g(p)]$ abgenommen werden. Nun wird gemäß der Beziehung $\underline{z} = x + \underline{y}$ ein Signal $\underline{z} = \underline{b}_m \cdot F_T(p) + \underline{b}_{Em} \cdot [F_T(0) - F_T(p) \cdot F_g(p)]$ gebildet. Dieses Synthesesignal $\underline{z}$ findet als dynamisch sehr hochwertiger Ersatz für den unverzögerten Istwert der Drehbeschleunigung $\underline{\alpha}$ des rotatorisch bewegten Läufers bei der regelungstechnischen Führung des genannten Antriebs weitere Verwendung.

Bei einem Wanderfeldantrieb wird die Linearbeschleunigung $\underline{\alpha}$ des linear bewegten Läufers mittels eines, mit diesem Läufer mechanisch verbundenen, vorzugsweise nach dem in die Linearbewegung transponierten Ferraris-Prinzip arbeitenden Beschleunigungsmessers meßtechnisch erfaßt und steht damit als gemessenes Beschleunigungssignal $\underline{b}_m = \underline{\alpha} \cdot F_g(p)$ zur Verfügung. Hierbei stellt $F_g(p)$, mit $F_g(0) = 1$, die sogenannte Meßübertragungsfunktion des Beschleunigungsmessers dar. Die Linearkraft $\underline{f}$ des Antriebs, die nachstehend als Beschleunigungsersatzsignal $\underline{b}_E = f$ bezeichnet sei, wird ebenfalls meßtechnisch erfaßt und steht damit als gemessenes Beschleunigungsersatzsignal $\underline{b}_{Em}$ zur Verfügung. Wie unmittelbar einzusehen ist, kann, ohne die Funktion der erfindungsgemäßen Einrichtung zu beeinträchtigen, anstelle der Linearkraft $\underline{f}$ des Antriebs natürlich auch die unmittelbar linearkraftbildende Querstromkomponente $i_q$ des Stromraumzeigers der mehrphasenstromgespeisten Wicklung des Antriebs als Beschleunigungsersatzsignal $\underline{b}_E = i_q$ verwendet werden. Dabei wird nachstehend, wie in der Regelungstechnik üblich, davon ausgegangen, daß einerseits das gemessene Beschleunigungssignal $\underline{b}_m$ und andererseits das gemessene Beschleunigungsersatzsignal $\underline{b}_{Em}$ unter Vernachlässigung sämtlicher, im genannten Antrieb entstehender Verluste und unter Zugrundelegung einer mechanisch absolut steifen Verbindung von jener Oberfläche des linear bewegten Läufers, an welcher der Linearschub des Antriebs angreift, bis zu jenem Ort des linear bewegten Teils des Linearbeschleunigungsmessers, wo der für die Beschleunigungserfassung genutzte Effekt generiert wird, jeweils so normiert sind, daß die Beziehung $\underline{b}_m = \underline{\alpha} \cdot F_g(p) = \underline{b}_{Em} \cdot F_g(p)$ erfüllt ist. Das gemessene Beschleunigungssignal $\underline{b}_m$ wird dem Eingang eines Tiefpasses mit der Tiefpaßübertragungsfunktion $F_T(p)$, mit $F_T(0)$ vorzugsweise gleich 1, zugeführt. An dessen Ausgang kann daher das Signal $\underline{x} = \underline{b}_m \cdot F_T(p)$ abgenommen werden. Das gemessene Beschleunigungsersatzsignal $\underline{b}_{Em}$ wird dem Eingang eines Hochpasses mit der Hochpaßübertragungsfunktion $F_H(p) = F_T(0) - F_T(p) \cdot F_g(p)$ zugeführt. An dessen Ausgang kann daher das Signal $\underline{y} = \underline{b}_{Em} \cdot [F_T(0) - F_T(p) \cdot F_g(p)]$ abgenommen werden. Nun wird gemäß der Beziehung $\underline{z} = \underline{x} + \underline{y}$ ein Signal $\underline{z} = \underline{b}_m \cdot F_T(p) + \underline{b}_{Em} \cdot [F_T(0) - F_T(p) \cdot F_g(p)]$ gebildet. Dieses Synthesesignal $\underline{z}$ findet als dynamisch sehr hochwertiger Ersatz für den unverzögerten Istwert der Linearbeschleunigung $\underline{\alpha}$ des linear bewegten Läufers bei der regelungstechnischen Führung des genannten Antriebs weitere Verwendung.

Bei einem Gleichstromantrieb wird die Drehbeschleunigung $\underline{\alpha}$ des rotatorisch bewegten Läufers mittels eines, mit diesem Läufer mechanisch verbundenen, vorzugsweise nach dem Ferraris-Prinzip arbeitenden Beschleunigungsmessers [3;4;5] meßtechnisch erfaßt und steht damit als gemessenes Beschleunigungssignal $\underline{b}_m = \underline{\alpha} F_g(p)$ zur Verfügung. Hierbei stellt $F_g(p)$, mit $F_g(0) = 1$, die sogenannte Meßübertragungsfunktion des Beschleunigungsmessers dar. Das Drehmoment $\underline{m}$ des Antriebs, das nachstehend als Beschleunigungsersatzsignal $\underline{b}_E = \underline{m}$ bezeichnet sei, wird ebenfalls meßtechnisch erfaßt und steht damit als gemessenes Beschleunigungsersatzsignal $\underline{b}_{Em}$ zur Verfügung. Wie unmittelbar einzusehen ist, kann, ohne die Funktion der erfindungsgemäßen Einrichtung zu beeinträchtigen, anstelle des Drehmoments $\underline{m}$ des Antriebs natürlich auch der Ankerstrom $i_a$ der gleichstromgespeisten Ankerwicklung des Antriebs als Beschleunigungsersatzsignal $\underline{b}_E = i_a$ verwendet werden. Dabei wird nachstehend, wie in der Regelungstechnik üblich, davon ausgegangen, daß einerseits das gemessene Beschleunigungssignal $\underline{b}_m$ und andererseits das gemessene Beschleunigungsersatzsignal $\underline{b}_{Em}$ unter Vernachlässigung sämtlicher, im genannten Antrieb entstehender Verluste und unter Zugrundelegung einer mechanisch absolut drehsteifen Verbindung von jener Oberfläche des rotatorisch bewegten Läufers, an welcher der Drehschub des Antriebs angreift, bis zu jenem Ort des rotatorisch bewegten Teils des Drehbeschleunigungsmessers, wo der für die Beschleunigungserfassung genutzte Effekt generiert wird, jeweils so normiert sind, daß die Beziehung $\underline{b}_m = \underline{\alpha} \cdot F_g(p) = \underline{b}_{Em} \cdot F_g(p)$ erfüllt ist. Das gemessene Beschleunigungssignal $\underline{b}_m$ wird dem Eingang eines Tiefpasses mit der Tiefpaßübertragungsfunktion $F_T(p)$, mit $F_T(0)$ vorzugsweise gleich 1, zugeführt. An dessen Ausgang kann daher das Signal $\underline{x} = \underline{b}_m \, F_T(p)$ abgenommen werden. Das gemessene Beschleunigungsersatzsignal $\underline{b}_{Em}$ wird dem Eingang eines Hochpasses mit der Hochpaßübertragungsfunktion $F_H(p) = F_T(0) - F_T(p) \, F_g(p)$ zugeführt. An dessen Ausgang kann infolgedessen das Signal $\underline{y} = \underline{b}_{Em} \cdot [F_T(0) - F_T(p) \cdot F_g(p)]$ abgenommen werden. Nun wird gemäß der Beziehung $\underline{z} = \underline{x} + \underline{y}$ ein Signal $\underline{z} = \underline{b}_m \, F_T(p) + \underline{b}_{Em} \cdot [F_T(0) - F_T(p) \cdot F_g(p)]$ gebildet. Dieses Synthesesignal $\underline{z}$ findet als dynamisch sehr hochwertiger Ersatz für den unverzögerten Istwert der Drehbeschleunigung $\underline{\alpha}$ des rotatorisch bewegten Läufers bei der regelungstechnischen Führung des genannten Antriebs weitere Verwendung.

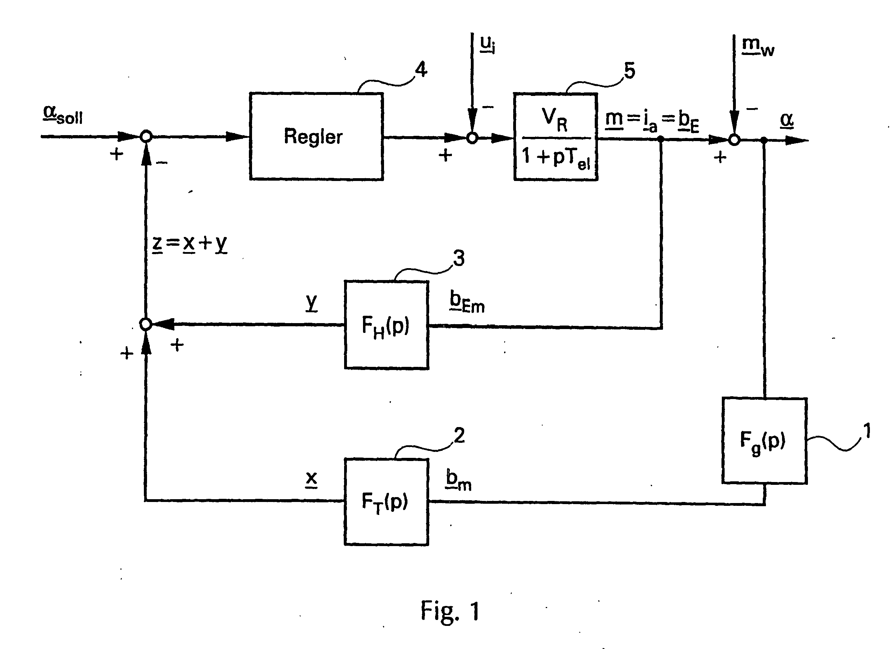

im folgenden werden die Vorrichtung und das Verfahren zur Gewinnung eines dynamisch hochwertigen, teilweise synthetisierten Signals für die Beschleunigung des Läufers einer Maschine am Beispiel einer fremderregten Gleichstrommaschine anhand der Darstellungen in den Figuren 1 bis 4 im einzelnen erläutert.

Fig. 1    zeigt ein Blockschaltbild zur Ausführung des erfindungsgemäßen Verfahrens,

Fig. 2    zeigt ein zweites Ausführungsbeispiel der Erfindung, in dem der Regler 4 durch ein Zweipunktglied 6, Abtastglied 7 und ein Halteglied 0. Ordnung 8 ersetzt ist,

Fig. 3    zeigt ein drittes Ausführungsbeispiel der Erfindung mit einem ersten modifizierten Hochpaß 10 und

Fig. 4    zeigt ein viertes Ausführungsbeispiel der Erfindung mit einem zweiten modifizierten Hochpaß 11.

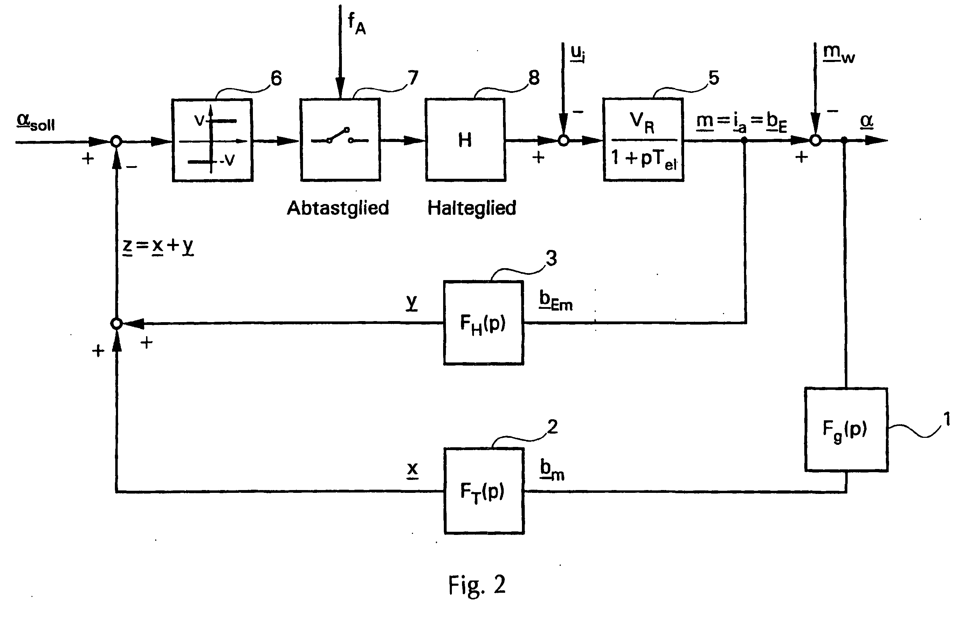

Für den Aufbau einer hochwertigen Positions- oder Geschwindigkeitsregelung für eine fremderregte Gleichstrommaschine ist es vorteilhaft, in der innersten Schleife statt des Ankerstromes die Drehbeschleunigung des Rotors zu führen, daß heißt zu regeln. Hierzu wird die Drehbeschleunigung $\underline{\alpha}$ des Rotors mittels eines, vorzugsweise nach dem Ferraris-Prinzip arbeitendem, Beschleunigungsmessers erfaßt und steht damit als gemessene Drehbeschleunigung $\underline{b}_m = \underline{\alpha} \cdot F_g(p)$ zur Verfügung. Der Block 1 (siehe Fig. 1, 2, 3 und 4) mit der Übertragungsfunktion $F_g(p)$, mit $F_g(0) = 1$, beschreibt den sogenannten Meßfrequenzgang des Beschleunigungsmessers. Das Drehmoment $\underline{m}$ des Antriebs, das nachstehend als Beschleunigungsersatzsignal $\underline{b}_E = \underline{m}$ bezeichnet sei, wird ebenfalls meßtechnisch erfaßt und steht damit als gemessenes Beschleunigungsersatzsignal $\underline{b}_{Em}$ zur Verfügung. Anstelle des Moments $\underline{m}$ des Antriebs kann natürlich auch der Ankerstrom $\underline{i}_a$ der gleichstromgespeisten Ankerwicklung des Antriebs als Beschleunigungsersatzsignal $\underline{b}_E = \underline{i}_a$ verwendet werden. Dabei wird nachstehend, wie in der Regelungstechnik üblich, davon ausgegangen, daß einerseits das gemessene Beschleunigungssignal $\underline{b}_m$ und andererseits das gemessene Beschleunigungsersatzsignal $\underline{b}_{Em}$ unter Vernachlässigung sämtlicher, im genannten Antrieb entstehender Verluste und unter Zugrundelegung einer mechanisch absolut drehsteifen Verbindung von jener Oberfläche des rotatorisch bewegten Läufers, an welcher der Drehschub des Antriebs angreift, bis zu jenem Ort des rotatorisch bewegten Teils des Drehbeschleunigungsmessers, wo der für die Beschleunigungserfassung genutzte Effekt generiert wird, jeweils so normiert sind, daß die Beziehung $\underline{b}_m = \underline{\alpha} \cdot F_g(p) = \underline{b}_{Em} \cdot F_g(p)$ erfüllt ist. Das gemessene Beschleunigungssignal $\underline{b}_m$ wird dem Eingang eines Tiefpasses 2 (siehe Fig. 1, 2, 3 und 4) mit der Tiefpaßübertragungsfunktion $F_T(p)$, mit $F_T(0)$ vorzugsweise gleich 1, zugeführt. An dessen Ausgang kann daher das Signal $\underline{x} = \underline{b}_m \cdot F_T(p)$ abgenommen werden. Das gemessene Beschleunigungsstromsignal $\underline{i}_{bm}$ wird dem Eingang eines Hochpasses 3 (siehe Fig. 1 und 2) mit der Hochpaßübertragungsfunktion $F_H(p) = F_T(0) - F_T(p) \cdot F_g(p)$ zugeführt. An dessen Ausgang kann infolgedessen das Signal $\underline{y} = \underline{b}_{Em} \cdot [F_T(0) - F_T(p) \cdot F_g(p)]$ abgenommen werden. Nun wird gemäß der Beziehung $\underline{z} = \underline{x} + \underline{y}$ ein Signal $\underline{z} = \underline{b}_m \cdot F_T(p) + \underline{b}_{Em} \cdot [F_T(0) - F_T(p) \cdot F_g(p)]$ gebildet. Dieses Synthesesignal $\underline{z}$ findet als dynamisch sehr hochwertiger Ersatz für den unverzögerten Istwert der Drehbeschleunigung $\underline{\alpha}$ des rotatorisch bewegten Läufers bei der regelungstechnischen Führung des genannten Antriebs weitere Verwendung. Die Differenz zwischen dem von einer überlagerten Regelung vorgegebenem Sollwert $\underline{\alpha}_{soll}$ und dem Syhthesesignal $\underline{z}$ wird als Regeldifferenz einem geeigneten Regler 4 (siehe Fig. 1) zugeführt. In dem für die Stabilität, mögliche Grenzzyklen und selbsterregte Schwingungen entscheidenden Führungsfrequenzgang des mit Hilfe des Synthesesignals $\underline{z}$ gebildeten Regelkreises sind die Verzögerung der Meßübertragungsfunktion $F_g(p)$ sowie die erhebliche störende Wirkung der Übertragungsfunktion $F_M(p)$ eliminiert. Dabei beschreibt die letztgenannte Übertragungsfunktion $F_M(p)$ den mechanischen Frequenzgang von jener Oberfläche des bewegten Läufers, an welcher der Schub des Antriebs angreift, bis zu jenem Ort des bewegten Teils des Beschleunigungsmessers, wo der für die Beschleunigungserfassung genutzte Effekt generiert wird. Der Tiefpaß mit der Tiefpaßübertragungsfunktion $F_T(p)$ schaltet den Einfluß dieses mechanischen Frequenzgangs nahezu vollständig aus. Solange die Übertragungsfunktion $F_M(p)$ noch nicht erheblich vom Wert 1 abweicht, weist die Dämpfung des Tiefpasses noch kein beachtlichen Werte auf. Ab der Grenzfrequenz des Tiefpasses steigt die Dämpfung dann aber kräftig an, so daß die unvermeidlichen Resonanzüberhöhungen des mechanischen Frequenzgangs praktisch keinen Einfluß mehr haben. Die Verzögerung des Beschleunigungssignals $\underline{b}_m$ durch die Meßübertragungsfunktion $F_g(p)$ sowie die zusätzlich durch den Tiefpaß verursachte Verzögerung werden durch das Signal $\underline{y} = \underline{b}_{Em} \cdot F_H(p)$ am Ausgang des Hochpasses im genannten Führungsfrequenzgang des mit Hilfe des Synthesesignals $\underline{z}$ gebildeten Regelkreises gänzlich eliminiert.

Das dargelegte erfindungsgemäße Vorgehen wird auch durch das in Figur 1 dargestellte Blockschaltbild beschrieben. Dabei beschreibt das Verzögerungsglied erster Ordnung 5 (siehe Fig. 1, 2, 3 und 4) mit der Verstärkung $V_R$ und der Zeitkonstanten $T_{el}$ die verzögerte Reaktion des Ankerstromes $\underline{i}_a$ auf eine Spannungsänderung am Eingang des Verzögerungsgliedes.

In einer bevorzugten Ausführungsform wird die Ausgangsspannung des Pulswechselrichter, der die Ankerwicklung des Antriebs speist, nach dem Prinzip der zeitdiskreten Schaltzustandssteuerung mit einer Taktfrequenz

$$f_A = \frac{1}{T_A}$$ im Bereich von 100 kHz.direkt aus einem Zweipunktregelkreis abgeleitet [6]. In Figur 2 ist daher der Regler 4 durch das Zweipunktglied 6, ein Abtastglied 7 mit der Abtastfrequenz $$f_A = \frac{1}{T_A}$$ und ein Halteglied nullter Ordnung 8 ersetzt. Die Verstärkungen V und -V im Zweipunktglied 6 berücksichtigen das Verhältnis der Umrichterausgangsspannung zur Nennspannung der Maschine. Das Abtastglied 7 und das Halteglied nullter Ordnung 8 berücksichtigen die Wirkung der zeitdiskreten Schaltzustandssteuerung. In dieser Ausführungsform der erfindungsgemäßen Einrichtung ist die Grenzfrequenz des Tiefpasses 2 mit der Tiefpaßübertragungsfunktion $F_T(p)$ genügend tief zu wählen, daß im Zweipunktregelkreis für das Synthesesignal $\underline{z}$ keine selbsterregten Schwingungen auftreten.

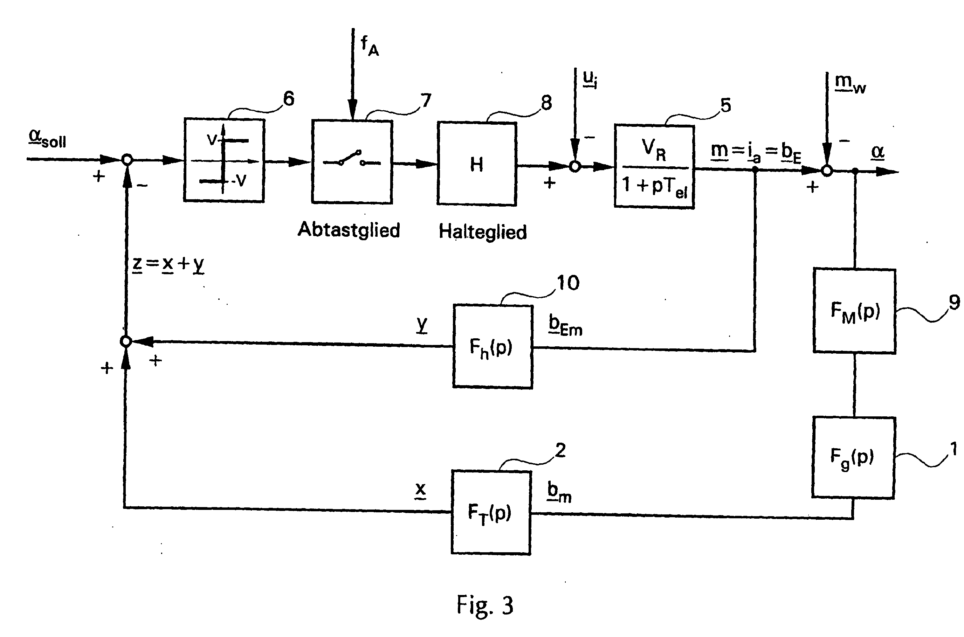

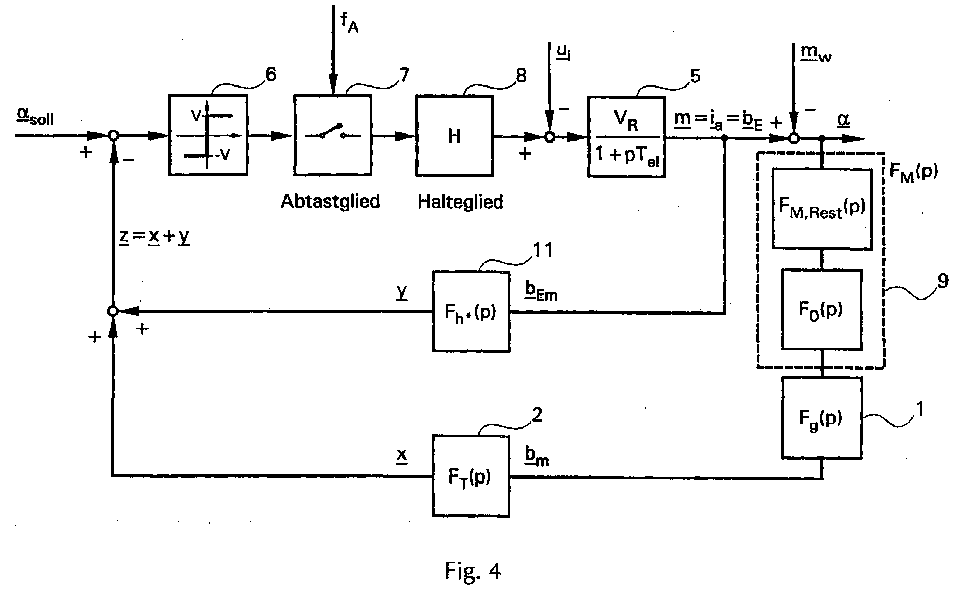

Sollte sich der in der praktischen Realisierung stets gegebene Umstand, daß der Zusammenhang zwischen dem gemessene Beschleunigungsersatzsignal $\underline{b}_{Em}$ und dem gemessenen Beschleunigungssignal $\underline{\alpha}_m$ durch die Gleichung $\underline{\alpha}_m = F_g(p) \cdot \underline{b}_{Em}$ nur unvollständig beschrieben wird als störend für die Qualität der unterlagerten Zweipunktregelung erweisen, so wird das erfindungsgemäße Verfahren erweitert. Diese Erweiterung wird durch das Blockschaltbild in Figur.3 gekennzeichnet. Dabei beschreibt die Übertragungsfunktion $F_M(p)$ 9 den mechanischen Frequenzgang von jener Oberfläche des bewegten Läufers, an welcher der Schub des Antriebs angreift, bis zu jenem Ort des bewegten Teils des Beschleunigungsmessers, wo der für die Beschleunigungserfassung genutzte Effekt generiert wird. Der Zusammenhang zwischen dem Beschleunigungsersatzsignal $\underline{b}_{Em}$ und der gemessenen Beschleunigung $\underline{\alpha}_m$ lautet somit $\underline{\alpha}_m = F_M(p) \cdot F_g(p) \cdot \underline{b}_{Em}$. Dieser mechanische Frequenzgang mit der Übertragungsfunktion $F_M(p)$ 9 (siehe Fig. 3 und 4) wird nun dadurch berücksichtigt, daß anstelle des Hochpasses 3 mit der Hochpaßübertragungsfunktion $F_H(p) = F_T(0)-F_T(p) \cdot F_g(p)$ ein modifizierter Hochpaß 10 mit der modifizierten Hochpaßübertragungsfunktion $F_h(p)=F_T(0)-F_T(p) \cdot F_g(p) \cdot F_M(p)$ eingesetzt wird. Die Grenzfrequenz des Tiefpasses 2 mit der Tiefpaßübertragungsfunktion $F_T(p)$ wird bei diesem Vorgehen zweckmäßigerweise erst dann festgelegt, nachdem der Hochpaß 3 mit der Hochpaßübertragungsfunktion $F_H(p)$ durch den modifizierten Hochpaß 10 mit der modifizierten Hochpaßübertragungsfunktion $F_h(p)$ ersetzt ist.

Sollte die Übertragungsfunktion $F_M(p)$ eine Vielzahl von Pol- und/oder Nullstellen aufweisen, so gestaltet sich die Realisierung des Hochpasses 10 mit der modifizierten Hochpaßübertragungsfunktion $F_h(p)$ sehr aufwendig. Um diesen Aufwand bei der Realisierung des Hochpasses 10 zu verringern, kann das erfindungsgemäße Verfahren noch folgendermaßen modifiziert werden. Von der Übertragungsfunktion des mechanischen Frequenzgangs wird ein Teil

$$F_0(p) = \frac{(1+p \cdot T_\mu) \cdot (1+2 \cdot D_v \cdot p \cdot T_v + p^2 \cdot T_v^2) \cdot \ldots}{(1+p \cdot T_i) \cdot (1+2 \cdot D_j \cdot p \cdot T_j + p^2 \cdot T_j^2) \cdot \ldots}$$

abgespalten, der einen oder einige Pole und/oder Nullstellen mit besonders großen Werten von $T_\mu$, $T_v$, $T_i$ oder $T_j$ berücksichtigt. Die Übertragungsfunktion des mechanischen Frequenzgangs läßt sich damit wie folgt darstellen:

$$F_M(p) = F_0(p) \cdot F_{M,Rest}(p) \text{ mit } F_{M,Rest}(p) = F_M(p) \cdot F_0^{-1}(p).$$

Der mechanische Frequenzgang mit der Übertragungsfunktion $F_M(p)$ 9 wird nun näherungsweise dadurch berücksichtigt, daß anstelle des Hochpasses 3 mit der Hochpaßübertragungsfunktion $F_H(p) = F_T(0) - F_T(p) \cdot F_g(p)$ ein modifizierter Hochpaß 11 mit der modifizierten Hochpaßübertragungsfunktion $F_h^*(p) = F_T(0) - F_T(p) \cdot F_g(p) \cdot F_0(p)$ eingesetzt wird. Die Grenzfrequenz des Tiefpasses 2 mit der Tiefpaßübertragungsfunktion $F_T(p)$ wird bei diesem Vorgehen zweckmäßigerweise erst dann festgelegt, nachdem der Hochpaß 3 mit der Hochpaßübertragungsfunktion $F_H(p)$ durch den modifizierten Hochpaß 11 mit der modifizierten Hochpaßübertragungsfunktion $F_h^*(p)$ ersetzt ist. Das dargelegte erfindungsgemäße Vorgehen wird durch das in Figur 4 dargestellte Blockschaltbild beschrieben.

[1] Leonhard, W.: Elektrische Regelantriebe für den Maschinenbau, Stand der Technik, Entwicklungstendenzen. VDI-Zeitschrift (1981) Nr. 10.

[2] Weck, M., Krüger, P., Brecher, C., Remy, F.: Statische und dynamische Steifigkeit von linearen Direktantrieben, antriebstechnik 36 (1997), Nr. 12, S. 57 - 63.

[3] Schwarz, B.: Beiträge zu reaktionsschnellen und hochgenauen Drehstrom-Positioniersystemen, Dissertation Universität Stuttgart, 1986.

[4] Gambach, H.: Servoantriebe mit unterlagerter Zweipunktregelung ihrer Drehbeschleunigung, Dissertation Universität Stuttgart, 1993.

[5] EP 0 661 543 B1, Gebersystem zur Ermittlung wenigstens einer der drei Größen Drehbeschleunigung, Winkelgeschwindigkeit oder Winkellage eines rotierenden Bauteils.

[6] Boehringer, A.: Einstellung der Schaltzustände in Stellgliedern der Leistungselektronik durch den unmittelbar gewünschten Effekt, etzArchiv Bd. 11 (1989), H. 12, S. 381 - 388.

## Patentansprüche

**1.** Verfahren zur Gewinnung eines dynamisch hochwertigen, teilweise synthetisierten Signals für die Beschleunigung $\underline{\alpha}$ eines Läufers eines elektrischen Antriebs, bei dem

- die Beschleunigung $\underline{\alpha}$ mittels eines mit dem Läufer mechanisch verbundenen Beschleunigungsmessers meßtechnisch erfaßt wird und als gemessenes Beschleunigungssignal $\underline{b}_m = \underline{\alpha} \cdot F_g(p)$ zur Verfügung steht mit einer Meßübertragungsfunktion $F_g(p)$ (1) mit der komplexen Frequenz p als Variable, für die gilt $F_g(p=0) = 1$,
- die den Schub des Läufers bewirkende Größe als Beschleunigungsersatzsignal $\underline{b}_E$ meßtechnisch erfaßt wird und als gemessenes Beschleunigungsersatzsignal $\underline{b}_{Em}$ zur Verfügung steht,
- das gemessene Beschleunigungssignal $\underline{b}_m$ und das gemessene Beschleunigungsersatzsignal $\underline{b}_{Em}$ unter Vernachlässigung sämtlicher in dem Antrieb entstehender Verluste und unter Zugrundelegung einer mechanisch absolut steifen Verbindung von jener Oberfläche, an welcher die den Schub bewirkende Größe angreift, bis zu jenem Ort eines bewegten Teils des Beschleunigungsmessers, an dem der für die Beschleunigungserfassung genutzte Effekt generiert wird, jeweils so normiert sind, daß die Beziehung $\underline{b}_m = \underline{\alpha} \cdot F_g(p) = \underline{b}_{Em} \cdot F_g(p)$ erfüllt ist,
- das gemessene Beschleunigungssignal $\underline{b}_m$ dem Eingang eines Tiefpasses (2) mit einer Tiefpaßübertragungsfunktion $F_T(p)$, mit $F_T(p=0)$ vorzugsweise gleich 1, zugeführt wird, an dessen Ausgang ein Signal $\underline{x} = \underline{b}_m \cdot F_T(p)$ abgenommen wird,
- das gemessene Beschleunigungsersatzsignal $\underline{b}_{Em}$ dem Eingang eines Hochpasses (3) mit einer Hochpaßübertragungsfunktion $F_H(p) = F_T(0) - F^1_T(p) \cdot F_g(p)$ zugeführt wird, an dessen Ausgang ein Signal $\underline{y} = \underline{b}_{Em} \cdot F_H(p)$ abgenommen wird,
- und gemäß der Beziehung $\underline{z} = \underline{x} + \underline{y}$ ein Signal $\underline{z} = \underline{b}_m \cdot F_T(p) + \underline{b}_{Em} \cdot F_H(p)$ gebildet wird, welches als dynamisch sehr hochwertiger Ersatz für einen unverzögerten Istwert der Beschleunigung $\underline{\alpha}$ des bewegten Läufers bei einer regelungstechnischen Führung des Antriebs weitere Verwendung findet.

**2.** Verfahren zur Gewinnung eines dynamisch hochwertigen, teilweise synthetisierten Signals für die Beschleunigung $\underline{\alpha}$ eines Läufers eines elektrischen Antriebs, bei dem

- die Beschleunigung $\underline{\alpha}$ mittels eines mit dem Läufer mechanisch verbundenen Beschleunigungsmessers meßtechnisch erfaßt wird und als gemessenes Beschleunigungssignal $\underline{b}_m = \underline{\alpha} F_g(p)$ zur Verfügung steht mit einer Meßübertragungsfunktion $F_g(p)$ (1) mit der komplexen Frequenz p als Variable, für die gilt $F_g(p = 0) = 1$,
- die den Schub des Läufers bewirkende Größe als Beschleunigungsersatzsignal $\underline{b}_E$ meßtechnisch erfaßt wird und als gemessenes Beschleunigungsersatzsignal $\underline{b}_{Em}$ zur Verfügung steht,
- das gemessene Beschleunigungssignal $\underline{b}_m$ und das gemessene Beschleunigungsersatzsignal $\underline{b}_{Em}$ zur Berücksichtigung der tatsächlichen Verhältnisse jeweils so normiert sind, daß die Beziehung $\underline{b}_m = \underline{b}_{Em} \cdot F_g(p) \cdot F_M(p)$ erfüllt ist, worin die Übertragungsfunktion $F_M(p)$ (9) den mechanischen Frequenzgang von jener Oberfläche des bewegten Läufers, an welcher der Schub des Antriebs angreift, bis zu jenem Ort des bewegten Teils des Beschleunigungsmessers beschreibt, an dem der für die Beschleunigungserfassung genutzte Effekt generiert wird,

- das gemessene Beschleunigungssignal $\underline{b}_m$ dem Eingang eines Tiefpasses (2) mit einer Tiefpaßübertragungsfunktion $F_T(p)$, mit $F_T(p=0)$ vorzugsweise gleich 1, zugeführt wird, an dessen Ausgang ein Signal $\underline{x} = \underline{b}_m \cdot F_T(p)$ abgenommen wird,

- das gemessene Beschleunigungsersatzsignal $\underline{b}_{Em}$ dem Eingang eines Hochpasses (10) mit einer Hochpaßübertragungsfunktion $F_h(p) = F_T(0) - F_T(p) \cdot F_g(p) \cdot F_M(p)$ zugeführt wird, an dessen Ausgang ein Signal $\underline{y} = \underline{b}_{Em} \cdot F_h(p)$ abgenommen wird, wobei die Grenzfrequenz des Tiefpasses (2) mit der Tiefpaßübertragungsfunktion $F_T(p)$ unter Berücksichtigung der Übertragungsfunktion $F_h(p)$ des Hochpasses (10) festgesetzt wird,

- und gemäß der Beziehung $\underline{z} = x + y$ ein Signal

$\underline{z} = \underline{b}_m \cdot F_T(p) + \underline{b}_{Em} \cdot F_h(p)$ gebildet wird, welches als dynamisch sehr hochwertiger Ersatz für einen unverzögerten Istwert der Beschleunigung $\underline{\alpha}$ des bewegten Läufers bei einer regelungstechnischen Führung des Antriebs weitere Verwendung findet.

**3.** Verfahren zur Gewinnung eines dynamisch hochwertigen, teilweise synthetisierten Signals für die Beschleunigung $\underline{\alpha}$ eines Läufers eines elektrischen Antriebs, bei dem

- die Beschleunigung $\underline{\alpha}$ mittels eines mit dem Läufer mechanisch verbundenen Beschleunigungsmessers meßtechnisch erfaßt wird und als gemessenes Beschleunigungssignal $\underline{b}_m = \underline{\alpha} \cdot F_g(p)$ zur Verfügung steht mit einer Meßübertragungsfunktion $F_g(p)$ (1) mit der komplexen Frequenz p als Variable, für die gilt $F_g(p - 0) = 1$,

- die den Schub des Läufers bewirkende Größe als Beschleunigungsersatzsignal $\underline{b}_E$ meßtechnisch erfaßt wird und als gemessenes Beschleunigungsersatzsignal $\underline{b}_{Em}$ zur Verfügung steht,

- das gemessene Beschleunigungssignal $\underline{b}_m$ und das gemessene Beschleunigungsersatzsignal $\underline{b}_{Em}$ zur Berücksichtigung der tatsächlichen Verhältnisse jeweils so normiert sind, daß die Beziehung $\underline{b}_m = \underline{b}_{Em} \cdot F_g(p) \cdot F_M(p)$ erfüllt ist, worin die Übertragungsfunktion $F_M(p)$ (9) den mechanischen Frequenzgang von jener Oberfläche des bewegten Läufers, an welcher der Schub des Antriebs angreift, bis zu jenem Ort des bewegten Teils des Beschleunigungsmessers beschreibt, an dem der für die Beschleunigungserfassung genutzte Effekt generiert wird, und wobei von der genannten Übertragungsfunktion $F_M(p)$

$$\text{jener Teil } F_0(p) = \frac{(1 + p \cdot T_\mu) \cdot (1 + 2 \cdot D_v \cdot p \cdot T_v + p^2 \cdot T_v^2) \cdots}{(1 + p \cdot T_i) \cdot (1 + 2 \cdot D_j \cdot p \cdot T_j + p^2 \cdot T_j^2) \cdots},$$

welcher einen oder einige Pole und/oder Nullstellen mit besonders großen Werten von $T_\mu$, $T_v$, $T_i$ oder $T_j$ berücksichtigt, abgespalten wird,

- das gemessene Beschleunigungssignal $\underline{b}_m$ dem Eingang eines Tiefpasses (2) mit einer Tiefpaßübertragungsfunktion $F_T(p)$, mit $F_T(p=0)$ vorzugsweise gleich 1, zugeführt wird, an dessen Ausgang ein Signal $\underline{x} = \underline{b}_m \cdot F_T(p)$ abgenommen wird,

- das gemessene Beschleunigungsersatzsignal $\underline{b}_{Em}$ dem Eingang eines Hochpasses (11) mit einer Hochpaßübertragungsfunktion $F_h{}^*(p) = F_T(0) - F_T(p) \cdot F_g(p) \cdot F_0(p)$ zugeführt wird, an dessen Ausgang ein Signal $\underline{y} = \underline{b}_{Em} \cdot F_h{}^*(p)$ abgenommen wird, wobei die Grenzfrequenz des Tiefpasses (2) mit der Tiefpaßübertragungsfunktion $F_T(p)$ unter Berücksichtigung der Übertragungsfunktion $F_h{}^*(p)$ des Hochpasses (11) festgesetzt wird,

- und gemäß der Beziehung $\underline{z} = \underline{x} + \underline{y}$ ein Signal $\underline{z} = \underline{b}_m \cdot F_T(P) + \underline{b}_{Em} \cdot F_h{}^*(p)$ gebildet wird, welches als dynamisch sehr hochwertiger Ersatz für einen unverzögerten Istwert der Beschleunigung $\underline{\alpha}$ des bewegten Läufers bei einer regelungstechnischen Führung des Antriebs weitere Verwendung findet.

**4.** Verfahren nach einem der Ansprüche 1 bis 3, **dadurch gekennzeichnet, daß** es sich bei dem Läufer um einen rotatorisch bewegten Läufer handelt, daß die Beschleunigung $\underline{\alpha}$ eine Drehbeschleunigung ist, daß der Beschleunigungsmesser vorzugsweise nach dem Ferraris-Prinzip arbeitet und daß die den Schub bewirkende Größe des Läufers ein Drehmoment $\underline{m}$ ist und für das Beschleunigungsersatzsignal $\underline{b}_E$ vorzugsweise $\underline{b}_E = \underline{m}$ gilt.

**5.** Verfahren nach Anspruch 4, **dadurch gekennzeichnet, daß** der Antrieb ein Drehstromantrieb ist und daß eine unmittelbar drehmomentbildende Querstromkomponente $\underline{i}_q$ eines Stromraumzeigers einer drehstromgespeisten Wicklung des Drehstromantriebs als Beschleunigungsersatzsignal $\underline{b}_E = \underline{i}_q$ verwendet wird.

6. Verfahren nach Anspruch 4, **dadurch gekennzeichnet, daß** der Antrieb ein Gleichstromantrieb ist und daß ein Ankerstrom $\underline{i}_a$ einer gleichstromgespeisten Ankerwicklung des Gleichstromantriebs als Beschleunigungsersatzsignal $\underline{b}_E = \underline{i}_a$ verwendet wird.

7. Verfahren nach Anspruch 6, **dadurch gekennzeichnet, daß** die Grenzfrequenz des Tiefpasses (2) mit der Tiefpaßübertragungsfunktion $F_T(p)$ so klein gewählt wird, daß dann, wenn die gleichstromgespeiste Ankerwicklung des Antriebs über einen sogenannten Pulswechselrichter gespeist wird, und dessen Ausgangsspannung nach dem Prinzip der zeitdiskreten Schaltzustandsänderung mit einer Taktfrequenz im Bereich von 100 kHz direkt aus einem Zweipunktregelkreis (6) abgeleitet wird, welcher den Istwert des Synthesesignals $\underline{z}$ auf dessen Sollwert einregelt, in diesem Zweipunktregelkreis (6) für das Synthesesignal $\underline{z}$ keine selbsterregten Schwingungen auftreten.

8. Verfahren nach einem der Ansprüche 1 bis 3, **dadurch gekennzeichnet, daß** der Läufer ein linear bewegter Läufer eines Wanderfeldantriebs ist, daß die Beschleunigung $\underline{\alpha}$ eine Linearbeschleunigung ist, daß der Beschleunigungsmesser vorzugsweise nach dem in die Linearbewegung transponierten Ferraris-Prinzip arbeitet und daß die den Schub bewirkende Größe eine Linearkraft $\underline{f}$ des Linearantriebs ist und für das Beschleunigungsersatzsignal $\underline{b}_E$ vorzugsweise $\underline{b}_E = \underline{f}$ gilt.

9. Verfahren nach Anspruch 8, **dadurch gekennzeichnet, daß** eine unmittelbar linearkraftbildende Querstromkomponente $\underline{i}_q$ eines Stromraumzeigers einer mehrphasenstromgespeisten Wicklung des Linearantriebs als Beschleunigungsersatzsignal $\underline{b}_E = \underline{i}_q$ verwendet wird.

10. Verfahren nach Anspruch 5, 8 oder 9, **dadurch gekennzeichnet, daß** die Grenzfrequenz des Tiefpasses (2) mit der Tiefpaßübertragungsfunktion $F_T(p)$ so klein gewählt wird, daß dann, wenn die mehrphasenstromgespeiste Wicklung des Antriebs über einen sogenannten Pulswechselrichter gespeist wird, und dessen ausgangsseitiger Spannungsraumzeiger nach dem Prinzip der zeitdiskreten Schaltzustandsänderung mit einer Taktfrequenz im Bereich von 100 kHz direkt aus einem Zweipunktregelkreis (6) abgeleitet wird, welcher den Istwert des Synthesesignals $\underline{z}$ auf dessen Sollwert einregelt, in diesem Zweipunktregelkreis (6) für das Synthesesignal $\underline{z}$ keine selbsterregten Schwingungen auftreten.

11. Verfahren nach einem der Ansprüche 1 bis 10, **dadurch gekennzeichnet, daß** der Tiefpaß (2) mit der Tiefpaßübertragungsfunktion $F_T(p)$ so dimensioniert wird, daß seine Grenzfrequenz kleiner als 10 kHz ist.

12. Vorrichtung zur Gewinnung eines dynamisch hochwertigen, teilweise synthetisierten Signals für die Beschleunigung $\underline{\alpha}$ eines Läufers eines elektrischen Antriebs, mit

    - einem mit dem Läufer mechanisch verbundenen Beschleunigungsmesser, mit dem die Beschleunigung $\underline{\alpha}$ meßtechnisch erfaßbar ist und als gemessenes Beschleunigungssignal $\underline{b}_m = \underline{\alpha} \cdot F_g(p)$ zur Verfügung stellbar ist mit einer Meßübertragungsfunktion $F_g(p)$ (1) mit der komplexen Frequenz p als Variable, für die gilt $F_g(p=0) = 1$,
    - Mittel zum meßtechnischen Erfassen der den Schub des Läufers bewirkenden Größe als Beschleunigungsersatzsignal $\underline{b}_E$ und Zurverfügungstellung als gemessenes Beschleunigungsersatzsignal $\underline{b}_{Em}$,
    - wobei das gemessene Beschleunigungssignal $\underline{b}_m$ und das gemessene Beschleunigungsersatzsignal $\underline{b}_{Em}$ unter Vernachlässigung sämtlicher in dem Antrieb entstehender Verluste und unter Zugrundelegung einer mechanisch absolut steifen Verbindung von jener Oberfläche, an welcher die den Schub bewirkende Größe angreift, bis zu jenem Ort eines bewegten Teils des Beschleunigungsmessers, an dem der für die Beschleunigungserfassung genutzte Effekt generiert wird, jeweils so normiert sind, daß die Beziehung
    $\underline{b}_m = \underline{\alpha} \cdot F_g(p) = \underline{b}_{Em} \cdot F_g(p)$ erfüllt ist,
    - einem Tiefpaß (2) mit einem Eingang, dem das gemessene Beschleunigungssignal $\underline{b}_m$ zugeführt ist, und einem Ausgang, an dem ein Signat $\underline{x} = \underline{b}_m \cdot F_T(p)$ abnehmbar ist, wobei der Tiefpaß (2) eine Tiefpaßübertragungsfunktion $F_T(p)$, mit $F_T(p=0)$ vorzugsweise gleich 1 aufweist,
    - einem Hochpaß (3), mit einem Eingang, dem das gemessene Beschleunigungsersatzsignal $\underline{b}_{Em}$ zugeführt ist, und einem Ausgang, an dem ein Signal $\underline{y} = \underline{b}_{Em} \cdot F_H(p)$ abnehmbar ist, wobei der Hochpaß (3) eine Hochpaßübertragungsfunktion
    $F_H(p) = F_T(0) - F_T(p) \cdot F_g(p)$ aufweist,
    - und wobei gemäß der Beziehung $\underline{z} = \underline{x} + \underline{y}$ ein Signal
    $\underline{z} = \underline{b}_m \cdot F_T(p) + \underline{b}_{Em} \cdot F_H(p)$ bildbar ist, welches als dynamisch sehr hochwertiger Ersatz für einen unverzögerten Istwert der Beschleunigung $\underline{\alpha}$ des bewegten Läufers bei einer regelungstechnischen Führung des Antriebs weiter verwendbar ist.

**13.** Vorrichtung zur Gewinnung eines dynamisch hochwertigen, teilweise synthetisierten Signals für die Beschleunigung $\alpha$ eines Läufers eines elektrischen Antriebs, mit

- einem mit dem Läufer mechanisch verbundenen Beschleunigungsmesser, mit dem die Beschleunigung $\alpha$ meßtechnisch erfaßbar ist und als gemessenes Beschleunigungssignal $\underline{b}_m = \underline{\alpha} \cdot F_g(p)$ zur Verfügung stellbar ist mit einer Meßübertragungsfunktion $F_g(p)$ (1) mit der komplexen Frequenz p als Variable, für die gilt $F_g(p=0) = 1$,
- Mittel zum meßtechnischen Erfassen der den Schub des Läufers bewirkenden Größe als Beschleunigungsersatzsignal $\underline{b}_E$ und Zurverfügungstellung als gemessenes Beschleunigungsersatzsignal $\underline{b}_{Em}$,
- wobei das gemessene Beschleunigungssignal $\underline{b}_m$ und das gemessene Beschleunigungsersatzsignal $\underline{b}_{Em}$ zur Berücksichtigung der tatsächlichen Verhältnisse jeweils so normiert sind, daß die Beziehung $\underline{b}_m = \underline{b}_{Em} \cdot F_g(p) \cdot F_M(p)$ erfüllt ist, worin die Übertragungsfunktion $F_M(p)$ (9) den mechanischen Frequenzgang von jener Oberfläche des bewegten Läufers, an welcher der Schub des Antriebs angreift, bis zu jenem Ort des bewegten Teils des Beschleunigungsmessers beschreibt, an dem der für die Beschleunigungserfassung genutzte Effekt generiert wird,
- einem Tiefpaß (2) mit einem Eingang, dem das gemessene Beschleunigungssignal $\underline{b}_m$ zugeführt ist, und einem Ausgang, an dem ein Signal $\underline{x} = \underline{b}_m \cdot F_T(p)$ abnehmbar ist, wobei der Tiefpaß (2) eine Tiefpaßübertragungsfunktion $F_T(p)$, mit $F_T(p = 0)$ vorzugsweise gleich 1 aufweist,
- einem Hochpaß (10), mit einem Eingang, dem das gemessene Beschleunigungsersatzsignal $\underline{b}_{Em}$ zugeführt ist, und einem Ausgang, an dem ein Signal $\underline{y} = \underline{b}_{Em} \cdot F_h(p)$ abnehmbar ist, wobei der Hochpaß (10) eine Hochpaßübertragungsfunktion $F_h(p) = F_T(0) - F_T(p) \cdot F_g(p) \cdot F_M(p)$ aufweist, und wobei die Grenzfrequenz des Tiefpasses (2) mit der Tiefpaßübertragungsfunktion $F_T(p)$ unter Berücksichtigung der Übertragungsfunktion $F_h(p)$ des Hochpasses (10) festgesetzt ist,
- und wobei gemäß der Beziehung $\underline{z} = \underline{x} + \underline{y}$ ein Signal $\underline{z} = \underline{b}_m \cdot F_T(p) + \underline{b}_{Em} \cdot F_h(p)$ bildbar ist, welches als dynamisch sehr hochwertiger Ersatz für einen unverzögerten Istwert der Beschleunigung $\underline{\alpha}$ des bewegten Läufers bei einer regelungstechnischen Führung des Antriebs weiter verwendbar ist.

**14.** Vorrichtung zur Gewinnung eines dynamisch hochwertigen, teilweise synthetisierten Signals für die Beschleunigung $\alpha$ eines Läufers eines elektrischen Antriebs, mit

- einem mit dem Läufer mechanisch verbundenen Beschleunigungsmesser, mit dem die Beschleunigung $\alpha$ meßtechnisch erfaßbar ist und als gemessenes Beschleunigungssignal $\underline{b}_m = \underline{\alpha} \cdot F_g(p)$ zur Verfügung stellbar ist mit einer Meßübertragungsunktion $F_g(p)$ (1) mit der komplexen Frequenz p als Variable, für die gilt $F_g(p=0) = 1$,
- Mittel zum meßtechnischen Erfassen der den Schub des Läufers bewirkenden Größe als Beschleunigungsersatzsignal $\underline{b}_E$ und Zurverfügungstellung als gemessenes Beschleunigungsersatzsignal $\underline{b}_{Em}$,
- wobei das gemessene Beschleunigungssignal $\underline{b}_m$ und das gemessene Beschleunigungsersatzsignal $\underline{b}_{Em}$ zur Berücksichtigung der tatsächlichen Verhältnisse jeweils so normiert sind, daß die Beziehung $\underline{b}_m = \underline{b}_{Em} \cdot F_g(p) \cdot F_M(p)$ erfüllt ist, worin die Übertragungsfunktion $F_M(p)$ (9) den mechanischen Frequenzgang von jener Oberfläche des bewegten Läufers, an welcher der Schub des Antriebs angreift, bis zu jenem Ort des bewegten Teils des Beschleunigungsmessers beschreibt, an dem der für die Beschleunigungserfassung genutzte Effekt generiert wird, und wobei von der genannten Übertragungsfunktion $F_M(p)$

$$\text{jener Teil } F_0(p) \;=\; \frac{(1 + p \cdot T_\mu) \cdot (1 + 2 \cdot D_\nu \cdot p \cdot T_\nu + p^2 \cdot T_\nu^2) \cdot \ldots}{(1 + p \cdot T_i) \cdot (1 + 2 \cdot D_j \cdot p \cdot T_j + p^2 \cdot T_j^2) \cdot \ldots},$$

welcher einen oder einige Pole und/oder Nullstellen mit besonders großen Werten von $T_\mu$, $T_\nu$, $T_i$ oder $T_j$ berücksichtigt, abgespalten ist,
- einem Tiefpaß (2) mit einem Eingang, dem das gemessene Beschleunigungssignal $\underline{b}_m$ zugeführt ist, und einem Ausgang, an dem ein Signal $\underline{x} = \underline{b}_m \cdot F_T(p)$ abnehmbar ist, wobei der Tiefpaß (2) eine Tiefpaßübertragungsfunktion $F_T(p)$, mit $F_T(p=0)$ vorzugsweise gleich 1 aufweist,
- einem Hochpaß (11), mit einem Eingang, dem das gemessene Beschleunigungsersatzsignal $\underline{b}_{Em}$ zugeführt ist, und einem Ausgang, an dem ein Signal $\underline{y} = \underline{b}_{Em} \cdot F_h^*(p)$ abnehmbar ist, wobei der Hochpaß (11) eine Hochpaßübertragungsfunktion $F_h^*(p) = F_T(0) - F_T(p) \cdot F_g(p) \cdot F_0(p)$ aufweist, und wobei die Grenzfrequenz des Tiefpasses (2) mit der Tiefpaßübertragungsfunktion $F_T(p)$ unter Berücksichtigung der Übertragungsfunktion

$F_h^*(p)$ des Hochpasses (11) festgesetzt ist,
- und wobei gemäß der Beziehung $\underline{z} = \underline{x} + \underline{y}$ ein Signal $\underline{z} = \underline{b}_m \cdot F_T(p) + \underline{b}_{Em} \cdot F_h^*(p)$ bildbar ist, welches als dynamisch sehr hochwertiger Ersatz für einen unverzögerten Istwert der Beschleunigung $\underline{\alpha}$ des bewegten Läufers bei einer regelungstechnischen Führung des Antriebs weiter verwendbar ist.

15. Vorrichtung nach einem der Ansprüche 12 bis 14, **dadurch gekennzeichnet, daß** es sich bei dem Läufer um einen rotatorisch bewegten Läufer handelt, daß die Beschleunigung $\underline{\alpha}$ eine Drehbeschleunigung ist, daß der Beschleunigungsmesser vorzugsweise nach dem Ferraris-Prinzip arbeitet und daß die den Schub bewirkende Größe des Läufers ein Drehmoment $\underline{m}$ ist und für das Beschleunigungsersatzsignal $\underline{b}_E$ vorzugsweise $\underline{b}_E = \underline{m}$ gilt.

16. Vorrichtung nach Anspruch 15, **dadurch gekennzeichnet, daß** der Antrieb ein Drehstromantrieb ist und daß eine unmittelbar drehmomentbildende Querstromkomponente $\underline{i}_q$ eines Stromraumzeigers einer drehstromgespeisten Wicklung des Drehstromantriebs als Beschleunigungsersatzsignal $\underline{b}_E = \underline{i}_q$ verwendet ist.

17. Vorrichtung nach Anspruch 15, **dadurch gekennzeichnet, daß** der Antrieb ein Gleichstromantrieb ist und daß ein Ankerstrom $\underline{i}_a$ einer gleichstromgespeisten Ankerwicklung des Gleichstromantriebs als Beschleunigungsersatzsignal $\underline{b}_E = \underline{i}_a$ verwendet ist.

18. Vorrichtung nach Anspruch 17, **dadurch gekennzeichnet, daß** die Grenzfrequenz des Tiefpasses (2) mit der Tiefpaßübertragungsfunktion $F_T(p)$ so klein gewählt ist, daß dann, wenn die gleichstromgespeiste Ankerwicklung des Antriebs über einen sogenannten Pulswechselrichter gespeist wird, und dessen Ausgangsspannung nach dem Prinzip der zeitdiskreten Schaltzustandsänderung mit einer Taktfrequenz im Bereich von 100 kHz direkt aus einem Zweipunktregelkreis (6) abgeleitet wird, welcher den Istwert des Synthesesignals $\underline{z}$ auf dessen Sollwert einregelt, in diesem Zweipunktregelkreis (6) für das Synthesesignal $\underline{z}$ keine selbsterregten Schwingungen auftreten.

19. Vorrichtung nach einem der Ansprüche 12 bis 14, **dadurch gekennzeichnet, daß** der Läufer ein linear bewegter Läufer eines Wanderfeldantriebs ist, daß die Beschleunigung $\alpha$ eine Linearbeschleunigung ist, daß der Beschleunigungsmesser vorzugsweise nach dem in die Linearbewegung transponierten Ferraris-Prinzip arbeitet und daß die den Schub bewirkende Größe eine Linearkraft $\underline{f}$ des Linearantriebs ist und für das Beschleunigungsersatzsignal $\underline{b}_E$ vorzugsweise $\underline{b}_E = \underline{f}$ gilt.

20. Vorrichtung nach Anspruch 19, **dadurch gekennzeichnet, daß** eine unmittelbar linearkraftbildende Querstromkomponente $\underline{i}_q$ eines Stromraumzeigers einer mehrphasenstromgespeisten Wicklung des Linearantriebs als Beschleunigungsersatzsignal $\underline{b}_E = \underline{i}_q$ verwendet ist.

21. Vorrichtung nach Anspruch 16, 19 oder 20, **dadurch gekennzeichnet, daß** die Grenzfrequenz des Tiefpasses (2) mit der Tiefpaßübertragungsfunktion $F_T(p)$ so klein gewählt ist, daß dann, wenn die mehrphasenstromgespeiste Wicklung des Antriebs über einen sogenannten Pulswechselrichter gespeist wird, und dessen ausgangsseitiger Spannungsraumzeiger nach dem Prinzip der zeitdiskreten Schaltzustandsänderung mit einer Taktfrequenz im Bereich von 100 kHz direkt aus einem Zweipunktregelkreis (6) abgeleitet ist, welcher den Istwert des Synthesesignals $\underline{z}$ auf dessen Sollwert einregelt, in diesem Zweipunktregelkreis (6) für das Synthesesignal $\underline{z}$ keine selbsterregten Schwingungen auftreten.

22. Vorrichtung nach einem der Ansprüche 12 bis 21, **dadurch gekennzeichnet, daß** der Tiefpaß (2) mit der Tiefpaßübertragungsfunktion $F_T(p)$ so dimensioniert ist, daß seine Grenzfrequenz kleiner als 10 kHz ist.

**Claims**

1. Method for producing a dynamically high-quality, partially synthesised signal for the acceleration $\underline{\alpha}$ of a rotor of an electrical drive, in which

- the acceleration $\underline{\alpha}$ is detected metrologically by means of an acceleration meter connected mechanically to the rotor and is available as a measured acceleration signal $\underline{b}_m = \underline{\alpha} \cdot F_g(p)$ with a measuring transmission function $F_g(p)$ (1) with the complex frequency p as variable for which there applies $F_g(p=0) = 1$,
- the variable effecting the thrust of the rotor is detected metrologically as acceleration substitute signal $\underline{b}_E$ and is available as measured acceleration substitute signal $\underline{b}_{Em}$,
- the measured acceleration signal $\underline{b}_m$ and the measured acceleration substitute signal $\underline{b}_{Em}$, neglecting all the losses produced in the drive and taking as a basis a mechanically absolutely rigid connection from that surface on which the variable effecting the thrust acts, up to that location of a moving part of the acceleration meter, at which the effect used for the acceleration detection is generated, are standardised respectively such that the relationship

$\underline{b}_m = \underline{\alpha} \cdot F_g(p) = \underline{b}_{Em} \cdot F_g(p)$ is fulfilled,

- the measured acceleration signal $\underline{b}_m$ is supplied to the input of a low-pass filter (2) with a low-pass transmission function $F_T(p)$, with $F_T(p=0)$ preferably equal to 1, at the output of which a signal $\underline{x} = \underline{b}_m \cdot F_T(p)$ is picked up,
- the measured acceleration substitute signal $\underline{b}_{Em}$ is supplied to the input of a high-pass filter (3) with a high-pass transmission function $F_H(p) = F_T(0) - F^1_T(p) \cdot F_g(p)$, at the output of which a signal $\underline{y} = \underline{b}_{Em} \cdot F_H(p)$ is picked up,
- and according to the relationship $\underline{z} = \underline{x} + \underline{y}$, a signal $\underline{z} = \underline{b}_m \cdot F_T(p) + \underline{b}_{Em} \cdot F_H(p)$ is formed, which is used further during operation of the drive by automatic control technology as a dynamically very high-quality substitute for an instantaneous actual value of the acceleration $\underline{\alpha}$ of the moving rotor.

**2.** Method for producing a dynamically high-quality, partially synthesised signal for the acceleration $\underline{\alpha}$ of a rotor of an electrical drive, in which

- the acceleration $\underline{\alpha}$ is detected metrologically by means of an acceleration meter connected mechanically to the rotor and is available as a measured acceleration signal $\underline{b}_m = \underline{\alpha} \cdot F_g(p)$ with a measuring transmission function $F_g(p)$ (1) with the complex frequency p as variable for which there applies $F_g(p=0) = 1$,
- the variable effecting the thrust of the rotor is detected metrologically as acceleration substitute signal $\underline{b}_E$ and is available as measured acceleration substitute signal $\underline{b}_{Em}$,
- the measured acceleration signal $\underline{b}_m$ and the measured acceleration substitute signal $\underline{b}_{Em}$, in order to take into account the actual ratios, are standardised respectively such that the relationship $\underline{b}_m = \underline{b}_{Em} \cdot F_g(p) \cdot F_M(p)$ is fulfilled, wherein the transmission function $F_M(p)$ (9) describes the mechanical frequency response from that surface of the moving rotor, on which the thrust of the drive acts, up to that location of the moving part of the acceleration meter, at which the effect used for the acceleration detection is generated,
- the measured acceleration signal $\underline{b}_m$ is supplied to the input of a low-pass filter (2) with a low-pass transmission function $F_T(p)$, with $F_T(p=0)$ preferably equal to 1, at the output of which a signal $\underline{x} = \underline{b}_m \cdot F_T(p)$ is picked up,
- the measured acceleration substitute signal $\underline{b}_{Em}$ is supplied to the input of a high-pass filter (10) with a high-pass transmission function $F_h(p) = F_T(0) - F_T(p) \cdot F_g(p) \cdot F_M(p)$, at the output of which a signal $\underline{y} = \underline{b}_{Em} \cdot F_h(p)$ is picked up, the cut-off frequency of the low-pass filter (2) with the low-pass transmission function $F_T(p)$ being established taking into account the transmission function $F_h(p)$ of the high-pass filter (10),
- and according to the relationship $\underline{z} = \underline{x} + \underline{y}$, a signal $\underline{z} = \underline{b}_m \cdot F_T(p) + \underline{b}_{Em} \cdot F_h(p)$ being formed, which is used further during operation of the drive by automatic control technology as a dynamically very high-quality substitute for an instantaneous actual value of the acceleration $\underline{\alpha}$ of the moving rotor.

**3.** Method for producing a dynamically high-quality, partially synthesised signal for the acceleration $\underline{\alpha}$ of a rotor of an electrical drive, in which

- the acceleration $\underline{\alpha}$ is detected metrologically by means of an acceleration meter connected mechanically to the rotor and is available as a measured acceleration signal $\underline{b}_m = \underline{\alpha} \cdot F_g(p)$ with a measuring transmission function $F_g(p)$ (1) with the complex frequency p as variable for which there applies $F_g(p=0) = 1$,
- the variable effecting the thrust of the rotor is detected metrologically as acceleration substitute signal $\underline{b}_E$ and is available as measured acceleration substitute signal $\underline{b}_{Em}$,
- the measured acceleration signal $\underline{b}_m$ and the measured acceleration substitute signal $\underline{b}_{Em}$, in order to take into account the actual ratios, are standardised respectively such that the relationship $\underline{b}_m = \underline{b}_{Em} \cdot F_g(p) \cdot F_M(p)$ is fulfilled, wherein the transmission function $F_M(p)$ (9) describes the mechanical frequency response from that surface of the moving rotor, on which the thrust of the drive acts, up to that location of the moving part of the acceleration meter, at which the effect used for the acceleration detection is generated, and from the mentioned transmission function $F_M(p)$,

$$\text{that part } F_0(p) = \frac{(1 + p \bullet T_\mu) \bullet (1 + 2 \bullet D_\nu \bullet p \bullet T_\nu + p^2 \bullet T_\nu^2) \bullet \ldots}{(1 + p \bullet T_i) \bullet (1 + 2 \bullet D_j \bullet p \bullet T_j + p^2 \bullet T_j^2) \bullet \ldots},$$

which takes into account one or some poles and/or zero positions with particularly large values of $T_\mu$, $T_v$, $T_i$ or $T_j$, being split off,

- the measured acceleration signal $\underline{b}_m$ is supplied to the input of a low-pass filter (2) with a low-pass transmission function $F_T(p)$, with $F_T(p=0)$ preferably equal to 1, at the output of which a signal $\underline{x} = \underline{b}_m \cdot F_T(p)$ is picked up,
- the measured acceleration substitute signal $\underline{b}_{Em}$ is supplied to the input of a high-pass filter (11) with a high-pass transmission function $F_h^*(p) = F_T(0) - F_T(p) \cdot F_g(p) \cdot F_0(p)$, at the output of which a signal $\underline{y} = \underline{b}_{Em} \cdot F_h^*(p)$ is picked up, the cut-off frequency of the low-pass filter (2) with the low-pass transmission function $F_T(p)$ being established taking into account the transmission function $F_h^*(p)$ of the high-pass filter (11),
- and according to the relationship $\underline{z} = \underline{x} + \underline{y}$, a signal $\underline{z} = \underline{b}_m \cdot F_T(p) + \underline{b}_{Em} \cdot F_h^*(p)$ being formed, which is used further during operation of the drive by automatic control technology as a dynamically very high-quality substitute for an instantaneous actual value of the acceleration $\underline{\alpha}$ of the moving rotor.

4. Method according to one of the claims 1 to 3, **characterised in that** the rotor concerns a rotationally moving rotor, **in that** the acceleration $\underline{\alpha}$ is a rotary acceleration, **in that** the acceleration meter operates preferably according to the Ferraris principle and **in that** the variable of the rotor effecting the thrust is a torque $\underline{m}$ and there applies for the acceleration substitute signal $\underline{b}_E$, preferably $\underline{b}_E = \underline{m.}$

5. Method according to claim 4, **characterised in that** the drive is a rotary current drive and **in that** a directly torque-forming quadrature-axis current component $\underline{i}_q$ of a current-space indicator of a rotary current-fed winding of the rotary current drive is used as acceleration substitute signal $\underline{b}_E = \underline{i}_q$.

6. Method according to claim 4, **characterised in that** the drive is a direct current drive and **in that** the armature current $\underline{i}_a$ of a direct current-fed armature winding of the direct current drive is used as acceleration substitute signal $\underline{b}_E = \underline{i}_a.$

7. Method according to claim 6, **characterised in that** the cut-off frequency of the low-pass filter (2) with the low-pass transmission function $F_T(p)$ is chosen so small that, when the direct current-fed armature winding of the drive is fed via a so-called pulsed current inverter and the output voltage of which is derived directly from an on-off control circuit (6) according to the principle of discrete-time switching condition alteration at a cycle frequency in the region of 100 kHz, which on-off control circuit adjusts the actual value of the synthesis signal $\underline{z}$ to its reference value, no self-starting oscillations occur in this on-off control circuit (6) for the synthesis signal $\underline{z}$.

8. Method according to one of the claims 1 to 3, **characterised in that** the rotor is a linearly moving rotor of a travelling-wave drive, **in that** the acceleration $\underline{\alpha}$ is a linear acceleration, **in that** the acceleration meter operates preferably according to the Ferraris principle transposed into the linear movement and **in that** the variable effecting the thrust is a linear force $\underline{f}$ of the linear drive and there applies for the acceleration substitute signal $\underline{b}_E$, preferably $\underline{b}_E = \underline{f.}$

9. Method according to claim 8, **characterised in that** a directly linear force-forming quadrature-axis current component $\underline{i}_q$ of a current-space indicator of a multi-phase current-fed winding of the linear drive is used as acceleration substitute signal $\underline{b}_E = \underline{i}_q$.

10. Method according to claim 5, 8 or 9, **characterised in that** the cut-off frequency of the low-pass filter (2) with the low-pass transmission function $F_T(p)$ is chosen so small that, when the multi-phase current-fed winding of the drive is fed via a so-called pulsed current inverter and the output-side voltage-space indicator of which is derived directly from an on-off control circuit (6) according to the principle of the discrete-time switching condition alteration at a cycle frequency in the region of 100 kHz, which on-off control circuit adjusts the actual value of the synthesis signal $\underline{z}$ to its reference value, no self-starting oscillations occur in this on-off control circuit (6) for the synthesis signal $\underline{z}$.

11. Method according to one of the claims 1 to 10, **characterised in that** the low-pass filter (2) with the low-pass transmission function $F_T(p)$ is dimensioned such that its cut-off frequency is less than 10 kHz.

12. Device for producing a dynamically high-quality, partially synthesised signal for the acceleration $\underline{\alpha}$ of a rotor of an electrical drive, having

- an acceleration meter which is connected mechanically to the rotor with which the acceleration $\underline{\alpha}$ can be detected metrologically and can be made available as a measured acceleration signal $\underline{b}_m = \underline{\alpha} \cdot F_g(p)$ with a measuring transmission function $F_g(p)$ (1) with the complex frequency p as variable for which there applies $F_g(p=0) = 1$,

- means for detecting metrologically the variable effecting the thrust of the rotor as acceleration substitute signal $\underline{b}_E$ and for making said variable available as measured acceleration substitute signal $\underline{b}_{Em}$,

- the measured acceleration signal $\underline{b}_m$ and the measured acceleration substitute signal $\underline{b}_{Em}$, neglecting all the losses produced in the drive and taking as a basis a mechanically absolutely rigid connection from that surface on which the variable effecting the thrust acts, up to that location of a moving part of the acceleration meter, at which the effect used for the acceleration detection is generated, being standardised respectively such that the relationship $\underline{b}_m = \underline{\alpha} \cdot F_g(p) = \underline{b}_{Em} \cdot F_g(p)$ is fulfilled,

- a low-pass filter (2) with an input to which the measured acceleration signal $\underline{b}_m$ is supplied and an output at which a signal $\underline{x} = \underline{b}_m \cdot F_T(p)$ can be picked up, the low-pass filter (2) having a low-pass transmission function $F_T(p)$, with $F_T(p=0)$ preferably equal to 1,

- a high-pass filter (3) with an input to which the measured acceleration substitute signal $\underline{b}_{Em}$ is supplied and an output at which a signal $\underline{y} = \underline{b}_{Em} \cdot F_H(p)$ can be picked up, the high-pass filter (3) having a high-pass transmission function $F_H(p) = F_T(0) - F_T(P) \cdot F_g(p)$,

- and according to the relationship $\underline{z} = \underline{x} + \underline{y}$, a signal $\underline{z} = \underline{b}_m \cdot F_T(p) + \underline{b}_{Em} \cdot F_H(p)$ being able to be formed, which can be used further during operation of the drive by automatic control technology as a dynamically very high-quality substitute for an instantaneous actual value of the acceleration $\underline{\alpha}$ of the moving rotor.

**13.** Device for producing a dynamically high-quality, partially synthesised signal for the acceleration $\underline{\alpha}$ of a rotor of an electrical drive, having

- an acceleration meter which is connected mechanically to the rotor, with which the acceleration $\underline{\alpha}$ can be detected metrologically and can be made available as a measured acceleration signal $\underline{b}_m = \underline{\alpha} \cdot F_g(p)$ with a measuring transmission function $F_g(p)$ (1) with the complex frequency p as variable for which there applies $F_g(p=0) = 1$,

- means for detecting metrologically the variable effecting the thrust of the rotor as acceleration substitute signal $\underline{b}_E$ and for making said variable available as measured acceleration substitute signal $\underline{b}_{Em}$,

- the measured acceleration signal $\underline{b}_m$ and the measured acceleration substitute signal $\underline{b}_{Em}$, in order to take into account the actual ratios, being standardised respectively such that the relationship $\underline{b}_m = \underline{b}_{Em} \cdot F_g(p) \cdot F_M(p)$ is fulfilled, wherein the transmission function $F_M(p)$ (9) describes the mechanical frequency response from that surface of the moving rotor, on which the thrust of the drive acts, up to that location of the moving part of the acceleration meter, at which the effect used for the acceleration detection is generated,

- a low-pass filter (2) with an input to which the measured acceleration signal $\underline{b}_m$ is supplied and an output at which a signal $\underline{x} = \underline{b}_m \cdot F_T(p)$ can be picked up, the low-pass filter (2) having a low-pass transmission function $F_T(p)$, with $F_T(p=0)$ preferably equal to 1,

- a high-pass filter (10) with an input to which the measured acceleration substitute signal $\underline{b}_{Em}$ is supplied and an output at which a signal $\underline{y} = \underline{b}_{Em} \cdot F_h(p)$ can be picked up, the high-pass filter (10) having a high-pass transmission function $F_h(p) = F_T(0) - F_T(p) \cdot F_g(p) \cdot F_M(p)$, and the cut-off frequency of the low-pass filter (2) with the low-pass transmission function $F_T(p)$ being established taking into account the transmission function $F_h(p)$ of the high-pass filter (10),

- and according to the relationship $\underline{z} = \underline{x} + \underline{y}$, a signal $\underline{z} = \underline{b}_m \cdot F_T(p) + \underline{b}_{Em} \cdot F_h(p)$ being able to be formed, which can be used further during operation of the drive by automatic control technology as a dynamically very high-quality substitute for an instantaneous actual value of the acceleration $\underline{\alpha}$ of the moving rotor.

**14.** Device for producing a dynamically high-quality, partially synthesised signal for the acceleration $\underline{\alpha}$ of a rotor of an electrical drive, having

- an acceleration meter which is connected mechanically to the rotor with which the acceleration $\underline{\alpha}$ can be detected metrologically and can be made available as a measured acceleration signal $\underline{b}_m = \underline{\alpha} \cdot F_g(p)$ with a measuring transmission function $F_g(p)$ (1) with the complex frequency p as variable for which there applies $F_g(p=0) = 1$,

- means for detecting metrologically the variable effecting the thrust of the rotor as acceleration substitute signal $\underline{b}_E$ and making said variable available as measured acceleration substitute signal $\underline{b}_{Em}$,

- the measured acceleration signal $\underline{b}_m$ and the measured acceleration substitute signal $\underline{b}_{Em}$, in order to take into account the actual ratios, being standardised respectively such that the relationship $\underline{b}_m = \underline{b}_{Em} \cdot F_g(p) \cdot F_M(p)$ is fulfilled, wherein the transmission function $F_M(p)$ (9) describes the mechanical frequency response from that surface of the moving rotor, on which the thrust of the drive acts, up to that location of the moving part of the acceleration meter, at which the effect used for the acceleration detection is generated, and from the mentioned transmission function $F_M(p)$,

$$\text{that part } F_0(p) = \frac{(1 + p \bullet T_\mu) \bullet (1 + 2 \bullet D_v \bullet p \bullet T_v + p^2 \bullet T_v^2) \bullet \ldots}{(1 + p \bullet T_i) \bullet (1 + 2 \bullet D_j \bullet p \bullet T_j + p^2 \bullet T_j^2) \bullet \ldots},$$

which takes into account one or some poles and/or zero positions with particularly large values of $T_u$, $T_v$, $T_i$ or $T_j$, being split off,

- a low-pass filter (2) with an input to which the measured acceleration signal $\underline{b}_m$ is supplied and an output at which a signal $\underline{x} = \underline{b}_m \bullet F_T(p)$ can be picked up, the low-pass filter (2) having a low-pass transmission function $F_T(p)$, with $F_T(p=0)$ preferably equal to 1,

- a high-pass filter (11) with an input to which the measured acceleration substitute signal $\underline{b}_{Em}$ is supplied and an output at which a signal $\underline{y} = \underline{b}_{Em} \bullet F_h{}^*(p)$ can be picked up, the high-pass filter (11) having a high-pass transmission function $F_h{}^*(p) = F_T(0) - F_T(p) \bullet F_g(p) \bullet F_0(p)$, and the cut-off frequency of the low-pass filter (2) with the low-pass transmission function $F_T(p)$ being established taking into account the transmission function $F_h{}^*(p)$ of the high-pass filter (11),

- and according to the relationship $\underline{z} = \underline{x} + \underline{y}$, a signal $\underline{z} = \underline{b}_m \bullet F_T(p) + \underline{b}_{Em} \bullet F_h{}^*(p)$ being able to be formed, which can be used further during operation of the drive by automatic control technology as a dynamically very high-quality substitute for an instantaneous actual value of the acceleration $\underline{\alpha}$ of the moving rotor.

15. Device according to one of the claims 12 to 14, **characterised in that** the rotor concerns a rotationally moving rotor, **in that** the acceleration $\underline{\alpha}$ is a rotary acceleration, **in that** the acceleration meter operates preferably according to the Ferraris principle and **in that** the variable of the rotor effecting the thrust is a torque $\underline{m}$ and there applies for the acceleration substitute signal $\underline{b}_E$, preferably $\underline{b}_E = \underline{m}$.

16. Device according to claim 15, **characterised in that** the drive is a rotary current drive and **in that** a directly torque-forming quadrature-axis current component $\underline{i}_q$ of a current-space indicator of a rotary current-fed winding of the rotary current drive is used as acceleration substitute signal $\underline{b}_E = \underline{i}_q$.

17. Device according to claim 15, **characterised in that** the drive is a direct current drive and **in that** the armature current $\underline{i}_a$ of a direct current-fed armature winding of the direct current drive is used as acceleration substitute signal $\underline{b}_E = \underline{i}_a$.

18. Device according to claim 17, **characterised in that** the cut-off frequency of the low-pass filter (2) with the low-pass transmission function $F_T(p)$ is chosen so small that, when the direct current-fed armature winding of the drive is fed via a so-called pulsed current inverter and the output voltage of which is derived directly from an on-off control circuit (6) according to the principle of the discrete-time switching condition alteration at a cycle frequency in the region of 100 kHz, which on-off control circuit adjusts the actual value of the synthesis signal $\underline{z}$ to its reference value, no self-starting oscillations occur in this on-off control circuit (6) for the synthesis signal $\underline{z}$.

19. Device according to one of the claims 12 to 14, **characterised in that** the rotor is a linearly moving rotor of a travelling-wave drive, **in that** the acceleration $\underline{\alpha}$ is a linear acceleration, **in that** the acceleration meter operates preferably according to the Ferraris principle transposed into the linear movement and **in that** the variable effecting the thrust is a linear force $\underline{f}$ of the linear drive and there applies for the acceleration substitute signal $\underline{b}_E$, preferably $\underline{b}_E = f$.

20. Device according to claim 19, **characterised in that** a directly linear force-forming quadrature-axis current component $\underline{i}_q$ of a current-space indicator of a multi-phase current-fed winding of the linear drive is used as acceleration substitute signal $\underline{b}_E = \underline{i}_q$.

21. Device according to claim 16, 19, or 20, **characterised in that** the cut-off frequency of the low-pass filter (2) with the low-pass transmission function $F_T(p)$ is chosen so small that, when the multi-phase current-fed winding of the drive is fed via a so-called pulsed current inverter and the output-side voltage-space indicator of which is derived directly from an on-off control circuit (6) according to the principle of the discrete-time switching condition alteration at a cycle frequency in the region of 100 kHz, which on-off control circuit adjusts the actual value of the synthesis signal $\underline{z}$ to its reference value, no self-starting oscillations occur in this on-off control circuit (6) for the synthesis signal $\underline{z}$.

22. Device according to one of the claims 12 to 21, **characterised in that** the low-pass filter (2) with the low-pass transmission function $F_T(p)$ is dimensioned such that its cut-off frequency is less than 10 kHz.

**Revendications**

1. Procédé pour la production d'un signal partiellement synthétisé de haute qualité dynamique correspondant à l'accélération $\underline{\alpha}$ d'un induit d'un entraînement électrique, dans lequel

   - l'accélération $\underline{\alpha}$ est captée par une technique de mesure utilisant un accéléromètre relié mécaniquement à l'induit et, sous la forme d'un signal d'accélération mesurée $\underline{b}_m = \underline{\alpha} \cdot F_g(p)$ est mise à disposition avec une fonction de transmission de mesure $F_g(p)$ (1) dont la variable est la fréquence complexe p, avec $F_g(p = 0) = 1$,
   - la poussée qui produit le déplacement de l'induit est captée par une technique de mesure sous la forme d'un signal d'accélération équivalent $\underline{b}_E$ et est disponible en tant que signal d'accélération équivalent mesuré $\underline{b}_{Em}$,
   - le signal d'accélération mesuré $\underline{b}_m$ et le signal d'accélération équivalent $\underline{b}_{Em}$, en négligeant l'ensemble des pertes se produisant dans l'entraînement et en prenant pour base une liaison absolument rigide mécaniquement de chaque surface sur laquelle agit la grandeur produisant la poussée, jusqu'au point de la partie mobile de l'accéléromètre où est généré l'effet utilisé pour capter l'accélération, sont normalisés de manière à satisfaire la relation $\underline{b}_m = \underline{\alpha} \cdot F_g(p) = \underline{b}_{Em} \cdot F_g(p)$,
   - le signal d'accélération mesuré $\underline{b}_m$ est envoyé à l'entrée d'un filtre passe-bas (2) présentant une fonction de transmission d'un filtre passe-bas $F_T(p)$, avec $F_T(p = 0)$ de préférence égale à 1, un signal $\underline{x} = \underline{b}_m \cdot F_T(p)$ étant perçu à la sortie du filtre passe-bas,
   - le signal d'accélération équivalent mesuré $\underline{b}_{Em}$ est envoyé à l'entrée d'un filtre passe-haut (3) présentant une fonction de transmission de filtre passe-haut $F_H(p) = F_T(0) - F_T(p) \cdot F_g(p)$ et à la sortie duquel est perçu un signal $\underline{y} = \underline{b}_{Em} \cdot F_H(p)$,
   - et selon la relation $\underline{z} = \underline{x} + \underline{y}$ est formé un signal $\underline{z} = \underline{b}_m \cdot F_T(p) + \underline{b}_{Em} \cdot F_H(p)$ qui, en tant qu'équivalent dynamique de haute qualité de la valeur réelle non ralentie de l'accélération $\alpha$ de l'induit mobile, trouve une autre utilisation dans un guidage régulé techniquement de l'entraînement.

2. Procédé pour la production d'un signal partiellement synthétisé de haute qualité dynamique correspondant à l'accélération $\underline{\alpha}$ d'un induit d'un entraînement électrique, dans lequel

   - l'accélération $\underline{\alpha}$ est captée par une technique de mesure utilisant un accéléromètre relié mécaniquement à l'induit et, sous la forme d'un signal d'accélération mesurée $\underline{b}_m = (\underline{\alpha} \cdot F_g(p)$ est mise à disposition une fonction de transmission de mesure $F_g(p)$ (1) dont la variable est la fréquence complexe p, avec $F_g(p = 0) = 1$,
   - la poussée qui produit le déplacement de l'induit est captée par une technique de mesure sous la forme d'un signal d'accélération équivalent $\underline{b}_E$ et est disponible en tant que signal d'accélération équivalent mesuré $\underline{b}_{Em}$,
   - le signal d'accélération mesuré $\underline{b}_m$ et le signal d'accélération équivalent $\underline{b}_{Em}$ mesuré, pour tenir compte des conditions réelles, sont normalisés de manière à satisfaire la relation $\underline{b}_m = \underline{b}_{Em} \cdot F_g(p) \cdot F_M(p)$ est satisfaite, dans laquelle la fonction de transmission $F_M(p)$ (9) décrit la réponse mécanique en fréquence de chaque surface de l'induit mobile sur laquelle agit la poussée de l'entraînement jusqu'au point de la partie mobile de l'accéléromètre sur lequel est généré l'effet utilisé pour capter l'accélération,
   - le signal d'accélération mesuré $\underline{b}_m$ est envoyé à l'entrée d'un filtre passe-bas (2) présentant une fonction de transmission d'un filtre passe-bas $F_T(p)$, avec $F_T(p = 0)$ de préférence égale à 1, un $\underline{signal\ x} = \underline{b}_m \cdot F_T(p)$ étant perçu à la sortie du filtre passe-bas,
   - le signal d'accélération équivalent mesuré $\underline{b}_{Em}$ est envoyé à l'entrée d'un filtre passe-haut (10) présentant une fonction de transmission de filtre passe-haut $F_h(p) = F_T(0) - F_T(p) \cdot Fg(p)$, et à la sortie duquel est perçu un signal $\underline{y} = \underline{b}_{Em} \cdot F_h(p)$, la fréquence limite du filtre passe-bas (2) étant déterminée au moyen de la fonction de transmission de filtre passe-bas $F_T(p)$ en tenant compte de la fonction de transmission $F_h(p)$ du filtre passe-haut (10),
   - et selon la relation $\underline{z} = \underline{x} + \underline{y}$ est formé un signal $\underline{z} = \underline{b}_m \cdot F_T(p) + \underline{b}_{Em} \cdot F_H(p)$ qui, en tant qu'équivalent dynamique de haute qualité de la valeur réelle non ralentie de l'accélération $\underline{\alpha}$ de l'induit mobile, trouve une autre utilisation dans un guidage régulé techniquement de l'entraînement.

3. Procédé pour la production d'un signal partiellement synthétisé de haute qualité dynamique correspondant à l'accélération $\underline{\alpha}$ d'un induit d'un entraînement électrique, dans lequel

   - l'accélération $\underline{\alpha}$ est captée par une technique de mesure utilisant un accéléromètre relié mécaniquement à l'induit et, sous la forme d'un signal d'accélération mesurée $\underline{b}_m = \underline{\alpha} \cdot F_g(p)$ est mise à disposition avec une fonction de transmission de mesure $F_g(p)$ (1) dont la variable est la fréquence complexe p, avec $F_g(p = 0) = 1$,
- la poussée qui produit le déplacement de l'induit est captée par une technique de mesure sous la forme d'un signal d'accélération équivalent $\underline{b}_E$ et est disponible en tant que signal d'accélération équivalent mesuré $\underline{b}_{Em}$,
- le signal d'accélération mesuré $\underline{b}_m$ et le signal d'accélération équivalent $\underline{b}_{Em}$ mesuré, pour tenir compte des conditions réelles, sont normalisés de manière à satisfaire la relation $\underline{b}_m = \underline{b}_{Em} \cdot F_g(p) \cdot F_M(p)$, dans laquelle la fonction de transmission $F_M(p)$ (9) décrit la réponse mécanique en fréquence de chaque surface de l'induit mobile sur laquelle agit la poussée de l'entraînement jusqu'au point de la partie mobile de l'accéléromètre sur lequel est généré l'effet utilisé pour capter l'accélération, la fonction de transmission $F_M(p)$

$$F_0(p) = \frac{(1 + p \cdot T_\mu) \cdot (1 + 2 \cdot D_v \cdot p \cdot T_v + P^2 \cdot T_v^2) \cdot \ldots}{(1 + p \cdot T_i) \cdot (1 + 2 \cdot D_j \cdot p \cdot T_v + P^2 \cdot T_j^2) \cdot \ldots}$$

qui prend en compte un ou quelques pôles et/ou zéros avec des valeurs particulièrement élevées de $T_\mu$, $T_v$, $T_i$, ou $T_j$ étant retirée de chaque partie,
- le signal d'accélération mesuré $\underline{b}_m$ est envoyé à l'entrée d'un filtre passe-bas (2) présentant une fonction de transmission d'un filtre passe-bas $F_T(p)$, avec $F_T(p = 0)$ de préférence égale à 1, un signal $\underline{x} = \underline{b}_m \cdot F_T(p)$ étant perçu à la sortie du filtre passe-bas,
- le signal d'accélération équivalent mesuré $\underline{b}_{Em}$ est envoyé à l'entrée d'un filtre passe-haut (10) présentant une fonction de transmission de filtre passe-haut $F_h(p) = F_T(0) - F_T(p) \cdot F_g(p)$, et à la sortie duquel est perçu un signal $\underline{y} = \underline{b}_{Em} \cdot F_h(p)$, la fréquence limite du filtre passe-bas (2) étant déterminée au moyen de la fonction de transmission de filtre passe-bas $F_T(p)$ en tenant compte de la fonction de transmission $F_h(p)$ du filtre passe-haut (10),
- et selon la relation $\underline{z} = \underline{x} + \underline{y}$ est formé un signal $\underline{z} = \underline{b}_m \cdot F_T(p) + \underline{b}_{Em} \cdot F_H(p)$ qui, en tant qu'équivalent dynamique de haute qualité de la valeur réelle non ralentie de l'accélération $\underline{\alpha}$ de l'induit mobile, trouve une autre utilisation dans un guidage régulé techniquement de l'entraînement.

**4.** Procédé selon une des revendications 1 à 3, **caractérisé en ce que** l'induit est un rotor, l'accélération $\underline{\alpha}$ est une accélération de rotation, l'accéléromètre fonctionne de préférence selon le principe de Ferrari et la force produisant le mouvement du rotor est un couple $\underline{m}$ avec, pour le signal d'accélération équivalent $\underline{b}_E$, de préférence $\underline{b}_E = m$.

**5.** Procédé selon la revendication 4, **caractérisé en ce que** l'entraînement est un entraînement à courant triphasé et qu'une composante transversale d'intensité $\underline{i}_q$ formant directement le couple d'un phaseur spatial d'intensité d'un enroulement alimenté en courant triphasé de l'entraînement est utilisée comme signal d'accélération équivalent $b_E = \underline{i}_q$.

**6.** Procédé selon la revendication 4, **caractérisé en ce que** l'entraînement est un entraînement à courant continu et qu'une intensité d'induit $\underline{i}_a$ d'un enroulement d'induit de l'entraînement alimenté en courant continu est utilisée comme signal d'accélération équivalent $b_E = \underline{i}_a$.

**7.** Procédé selon la revendication 6, **caractérisé en ce que** la fréquence limite du filtre passe-bas (2) correspondant à la fonction de transmission du filtre passe-bas $F_T(p)$ est choisie suffisamment petite pour que, si l'enroulement d'induit de l'entraînement alimenté en courant continu est alimenté par ce qu'on appelle un onduleur pulsatoire, et que la tension de sortie de cet enroulement est dérivée directement d'un circuit de régulation à deux points (6), selon le principe de la modification de l'état de commutation à valeurs discrètes de temps, avec une fréquence de base située dans le domaine des 100 kHz, ce circuit régulant la valeur réelle du signal synthétique $\underline{z}$ à sa valeur de consigne, il ne se produit aucune oscillation auto-excitée dans ce circuit de régulation à deux points (6) pour le signal synthétique $\underline{z}$.

**8.** Procédé selon une des revendications 1 à 3, **caractérisé en ce que** l'induit est un induit à déplacement linéaire d'un entraînement à champ d'ondes progressives, que l'accélération $\underline{\alpha}$ est une accélération linéaire, que l'accéléromètre fonctionne de préférence selon le principe de Ferrari transposé au mouvement linéaire et que la force exerçant la poussée est une force linéaire $\underline{f}$ de l'entraînement linéaire, et avec pour le signal d'accélération équivalent $b_E$ de préférence $b_E = \underline{f}$.

**9.** Procédé selon la revendication 8, **caractérisé en ce qu'**une composante transversale d'intensité $\underline{i}_q$ formant directement le couple d'un phaseur spatial d'intensité d'un enroulement alimenté en courant polyphasé de l'entraînement est utilisé comme signal d'accélération équivalent $b_E = i_q$.

**10.** Procédé selon la revendication 5, 8 ou 9, **caractérisé en ce que** la fréquence limite du filtre passe-bas (2) correspondant à la fonction de transmission du filtre passe-bas $F_T(p)$ est choisie suffisamment petite pour que, si l'enroulement d'induit de l'entraînement alimenté en courant continu est alimenté par ce qu'on appelle un onduleur pulsatoire, et que la tension de sortie de cet enroulement est dérivée directement d'un circuit de régulation à deux points (6), selon le principe de la modification de l'état de commutation à valeurs discrètes de temps, avec une fréquence de base située dans le domaine des 100 kHz, ce circuit régulant la valeur réelle du signal synthétique $z$ à sa valeur de consigne, il ne se produit aucune oscillation auto-excitée dans ce circuit de régulation à deux points (6) pour le signal synthétique $z$.

**11.** Procédé selon une des revendications 1 à 10, **caractérisé en ce que** le filtre passe-bas (2) avec sa fonction de transmission $F_T(p)$ est dimensionné de manière que sa fréquence limite est inférieure à 10 kHz.

**12.** Dispositif pour la production d'un signal partiellement synthétisé de haute qualité dynamique correspondant à l'accélération $\alpha$ d'un induit d'un entraînement électrique dans lequel

- un accéléromètre relié mécaniquement à l'induit capte l'accélération $\alpha$ par une technique de mesure et la met à disposition en tant que signal d'accélération mesuré $b_m = \alpha \cdot F_g(p)$ avec une fonction de transmission de mesure $F_g(p)$ (1), dont la variable est la fréquence complexe $p$, avec $F_g(p = 0) = 1$,
- des moyens sont prévus pour capter la grandeur produisant la poussée de l'induit, par une technique de mesure, sous la forme de signal d'accélération équivalent $b_E$ et pour le mettre à disposition en tant que signal d'accélération équivalent mesuré $b_{Em}$,
- le signal d'accélération mesuré $b_m$ et le signal d'accélération équivalent $b_{Em}$, en négligeant l'ensemble des pertes se produisant dans l'entraînement et en prenant pour base une liaison absolument rigide mécaniquement de chaque surface sur laquelle agit la grandeur produisant le déplacement, jusqu'au point de la partie mobile de l'accéléromètre où est généré l'effet utilisé pour capter l'accélération, sont normalisés de manière à satisfaire la relation $b_m = \alpha \cdot F_g(p) = b_{Em} \cdot F_g(p)$,
- il est prévu un filtre passe-bas (2) avec une entrée, à laquelle est envoyé le signal d'accélération mesuré $b_m$ et avec une sortie à laquelle peut être perçu un signal $x = b_m \cdot F_T(p)$, ce filtre ayant une fonction de transmission de filtre passe-bas $F_T(p)$, avec de préférence $F_T(p = 0) = 1$,
- il est prévu un filtre passe-haut (3) avec une entrée, à laquelle est envoyé le signal d'accélération mesuré $b_{Em}$ et avec une sortie à laquelle peut être perçu un signal $y = b_{Em} \cdot F_H(p)$, ce filtre ayant une fonction de transmission de filtre passe-haut $F_H(p) = F_T(0) - F_T(p) \cdot F_g(p)$.
- et selon la relation $z = x + y$ est formé un signal $z = b_m \cdot F_T(p) + b_{Em} \cdot F_H(p)$ qui, en tant qu'équivalent dynamique de haute qualité de la valeur réelle non ralentie de l'accélération $\alpha$ de l'induit mobile, trouve une autre utilisation dans un guidage régulé techniquement de l'entraînement.

**13.** Dispositif pour la production d'un signal partiellement synthétisé de haute qualité dynamique correspondant à l'accélération $\alpha$ d'un induit d'un entraînement électrique dans lequel

- un accéléromètre relié mécaniquement à l'induit capte l'accélération $\alpha$ par une technique de mesure et la met à disposition en tant que signal d'accélération mesuré $b_m = \alpha \cdot F_g(p)$ avec une fonction de transmission de mesure $F_g(p)$ (1), dont la variable est la fréquence complexe $p$, avec $F_g(p = 0) = 1$,
- des moyens sont prévus pour capter la grandeur produisant la poussée de l'induit, par une technique de mesure, sous la forme de signal d'accélération équivalent $b_E$ et pour le mettre à disposition en tant que signal d'accélération équivalent mesuré $b_{Em}$,
- le signal d'accélération mesuré $b_m$ et le signal d'accélération équivalent $b_{Em}$ mesuré, pour tenir compte des conditions réelles, sont normalisés de manière que la relation $b_m = b_{Em} \cdot F_g(p) \cdot F_M(p)$ est satisfaite, dans laquelle la fonction de transmission $F_M(p)$ (9) décrit la réponse mécanique en fréquence de chaque surface de l'induit mobile sur lequel agit la poussée de l'entraînement jusqu'au point de la partie mobile de l'accéléromètre sur lequel est généré l'effet utilisé pour capter l'accélération,
- il est prévu un filtre passe-bas (2) avec une entrée, à laquelle est envoyé le signal d'accélération mesuré $b_m$ et avec une sortie à laquelle peut être perçu un signal $x = h_m \cdot F_T(p)$, ce filtre ayant une fonction de transmission de filtre passe-bas $F_T(p)$, avec de préférence $F_T(p = 0) = 1$,
- il est prévu un filtre passe-haut (3) avec une entrée, à laquelle est envoyé le signal d'accélération mesuré $b_{Em}$ et avec une sortie à laquelle peut être perçu un signal $y = b_{Em} \cdot F_H(p)$, ce filtre ayant une fonction de transmission de filtre passe-haut $F_H(p) = F_T(0) - F_T(p) \cdot F_g(p)$, la fréquence limite du filtre passe-bas (2) étant déterminée au moyen de la fonction de transmission de filtre passe-bas $F_T(p)$ en tenant compte de la fonction de transmission $F_h(p)$ du filtre passe-haut (10),

- et selon la relation $\underline{z} = \underline{x} + \underline{y}$ est formé un signal $\underline{z} = \underline{b}_m \cdot F_T(p) + \underline{b}_{Em} \cdot F_H(p)$ qui, en tant qu'équivalent dynamique de haute qualité de la valeur réelle non ralentie de l'accélération $\underline{\alpha}$ de l'induit mobile, trouve une autre utilisation dans un guidage régulé techniquement de l'entraînement.

**14.** Dispositif pour la production d'un signal partiellement synthétisé de haute qualité dynamique correspondant à l'accélération $\underline{\alpha}$ d'un induit d'un entraînement électrique dans lequel

- un accéléromètre relié mécaniquement à l'induit capte l'accélération $\underline{\alpha}$ par une technique de mesure et la met à disposition en tant que signal d'accélération mesuré $\underline{b}_m = \underline{\alpha} \cdot F_g(p)$ avec une fonction de transmission de mesure $F_g(p)$ (1), dont la variable est la fréquence complexe $\underline{p}$, avec $F_g(p = 0) = 1$,
- des moyens sont prévus pour capter la grandeur produisant la poussée de l'induit, par une technique de mesure, sous la forme de signal d'accélération équivalent $b_E$ et pour le mettre à disposition en tant que signal d'accélération équivalent mesuré $\underline{b}_{Em}$,
- le signal d'accélération mesuré $\underline{b}_m$ et le signal d'accélération équivalent $\underline{b}_{Em}$ mesuré, pour tenir compte des conditions réelles, sont normalisés de manière que la relation $\underline{b}_m = \underline{b}_{Em} \cdot F_g(p) \cdot F_M(p)$ est satisfaite, dans laquelle la fonction de transmission $F_M(p)$ (9) décrit la réponse mécanique en fréquence de chaque surface de l'induit mobile sur laquelle agit la poussée de l'entraînement jusqu'au point de la partie mobile de l'accéléromètre sur lequel est généré l'effet utilisé pour capter l'accélération, la fonction de transmission $F_M(p)$

$$F_0(p) = \frac{(1 + p \cdot T_\mu) \cdot (1 + 2 \cdot D_v \cdot p \cdot T_v + P^2 \cdot T_v^2) \cdot \ldots}{(1 + p \cdot T_i) \cdot (1 + 2 \cdot D_j \cdot p \cdot T_v + P^2 \cdot T_j^2) \cdot \ldots}$$

qui prend en compte un ou quelques pôles et/ou zéros avec des valeurs particulièrement élevées de $T_\mu, T_v, T_i, ou T_j$ étant retirée de chaque partie,

- il est prévu un filtre passe-bas (2) avec une entrée, à laquelle est envoyé le signal d'accélération mesuré $\underline{b}_m$ et avec une sortie à laquelle peut être perçu un signal $\underline{x} = \underline{b}_m \cdot F_T(p)$, ce filtre ayant une fonction de transmission de filtre passe-bas $F_T(p)$, avec de préférence $F_T(p = 0) = 1$,
- il est prévu un filtre passe-haut (3) avec une entrée, à laquelle est envoyé le signal d'accélération mesuré $\underline{b}_{Em}$ et avec une sortie à laquelle peut être perçu un signal $\underline{y} = \underline{b}_{Em} \cdot F_H(p)$, ce filtre ayant une fonction de transmission de filtre passe-haut $F_H(p) = F_T(0) - F_T(p) \cdot Fg(p)$, la fréquence limite du filtre passe-bas (2) étant déterminée au moyen de la fonction de transmission de filtre passe-bas $F_T(p)$ en tenant compte de la fonction de transmission $F_h(p)$ du filtre passe-haut (10),
- et selon la relation $\underline{z} = \underline{x} + \underline{y}$ est formé un signal $\underline{z} = \underline{b}_m \cdot F_T(p) + \underline{b}_{Em} \cdot F_H(p)$ qui, en tant qu'équivalent dynamique de haute qualité de la valeur réelle non ralentie de l'accélération $\underline{\alpha}$ de l'induit mobile, trouve une autre utilisation dans un guidage régulé techniquement de l'entraînement.

**15.** Dispositif selon une des revendications 12 à 14, **caractérisé en ce que** l'induit est un rotor, l'accélération $\underline{\alpha}$ est une accélération de rotation, l'accéléromètre fonctionne de préférence selon le principe de Ferrari et la force produisant le mouvement du rotor est un couple $\underline{m}$ avec, pour le signal d'accélération équivalent $\underline{b}_E$, de préférence $\underline{b}_E = m$.

**16.** Dispositif selon la revendication 15, **caractérisé en ce que** l'entraînement est un entraînement à courant triphasé et qu'une composante transversale d'intensité $\underline{i}_q$ formant directement le couple d'un phaseur spatial d'intensité d'un enroulement alimenté en courant triphasé de l'entraînement est utilisée comme signal d'accélération équivalent $b_E = \underline{i}_q$.

**17.** Dispositif selon la revendication 15, **caractérisé en ce que** l'entraînement est un entraînement à courant continu et qu'une intensité d'induit $\underline{i}_a$ d'un enroulement d'induit de l'entraînement alimenté en courant continu est utilisée comme signal d'accélération équivalent $b_E = \underline{i}_a$.

**18.** Dispositif selon la revendication 17, **caractérisé en ce que** la fréquence limite du filtre passe-bas (2) correspondant à la fonction de transmission du filtre passe-bas $F_T(p)$ est choisie suffisamment petite pour que, si l'enroulement d'induit de l'entraînement alimenté en courant continu est alimenté par ce qu'on appelle un onduleur pulsatoire, et que la tension de sortie de cet enroulement est dérivée directement d'un circuit de régulation à deux points (6), selon le principe de la modification de l'état de commutation à valeurs discrètes de temps, avec une fréquence de base située dans le domaine des 100 kHz, ce circuit régulant la valeur réelle du signal synthétique $\underline{z}$ à sa valeur de consigne, il ne se produit aucune oscillation autoexcitée dans ce circuit de régulation à deux points (6) pour le signal synthétique $\underline{z}$.

**19.** Dispositif selon une des revendications 12 à 14, **caractérisé en ce que** l'induit est un induit à déplacement linéaire d'un entraînement à champ d'ondes progressives, que l'accélération $\underline{\alpha}$ est une accélération linéaire, que l'accéléromètre fonctionne de préférence selon le principe de Ferrari transposé au mouvement linéaire et que la force exerçant la poussée est une force linéaire $\underline{f}$ de l'entraînement linéaire, et que pour le signal d'accélération équivalent $b_E$, de préférence $b_E = \underline{f}$.

**20.** Dispositif selon la revendication 19, **caractérisé en ce qu'**une composante transversale d'intensité $i_q$ formant directement le couple d'un phaseur spatial d'intensité d'un enroulement alimenté en courant polyphasé de l'entraînement est utilisé comme signal d'accélération équivalent $b_E = i_q$.

**21.** Dispositif selon la revendication 16, 19 ou 20, **caractérisé en ce que** la fréquence limite du filtre passe-bas (2) avec la fonction de transmission du filtre passe-bas $F_T(p)$ est choisie suffisamment petite pour que, si l'enroulement d'induit de l'entraînement alimenté en courant continu est alimenté par ce qu'on appelle un onduleur pulsatoire, et que la tension de sortie de cet enroulement est dérivée directement d'un circuit de régulation à deux points (6), selon le principe de la modification de l'état de commutation à valeurs discrètes de temps, avec une fréquence de base située dans le domaine des 100 kHz, ce circuit régulant la valeur réelle du signal synthétique $\underline{z}$ à sa valeur de consigne, il ne se produit aucune oscillation autoexcitée dans ce circuit de régulation à deux points (6) pour le signal synthétique $\underline{z}$.

**22.** Dispositif selon une des revendications 12 à 21, **caractérisé en ce que** le filtre passe-bas (2) avec sa fonction de transmission $F_T(p)$ est dimensionné de manière que sa fréquence limite est inférieure à 10 kHz.

Fig. 1

Fig. 2

Fig. 3

Fig. 4